# EUROPEAN PATENT APPLICATION

(11) **EP 4 557 673 A1**
(43) Date of publication of application: **21.05.2025**
(21) Application number: 23851477.2
(22) Date of filing: 30.06.2023
(51) Int. Cl.: H04L 12/18

(54) **DATA PROCESSING METHOD AND RELATED APPARATUS**

(30) Priority: 11.08.2022 CN 202210963799
(71) Applicant: Huawei Technologies Co., Ltd., Shenzhen, Guangdong 518129 (CN)
(72) Inventor: LI, Liangchuan, Shenzhen, Guangdong 518129 (CN); LIU, Gengchen, Shenzhen, Guangdong 518129 (CN); HUANG, Yuanda, Shenzhen, Guangdong 518129 (CN)
(74) Representative: Maiwald GmbH
(86) International application number: PCT/CN2023/104820
(87) International publication number: WO 2024/032250

(57) **Abstract**

Embodiments of this application disclose a data processing method and a related apparatus, to perform different processing operations on data of different traffic types to help improve communication transmission performance and data processing performance of a passive optical network PON. The method in embodiments of this application includes: An optical line terminal OLT receives a data frame from a first optical network unit ONU, where the data frame carries service data. The OLT determines a traffic type corresponding to the service data, where the traffic type includes east-west traffic or north-south traffic. The OLT performs a corresponding operation on the data frame in a processing manner corresponding to the traffic type, where a processing manner corresponding to the east-west traffic is different from a processing manner corresponding to the north-south traffic.

## Description

This application claims priority to Chinese Patent Application No. 202210963799.9, filed with the China National Intellectual Property Administration on August 11, 2022 and entitled "DATA PROCESSING METHOD AND RELATED APPARATUS", which is incorporated herein by reference in its entirety.

### TECHNICAL FIELD

This application relates to the field of optical communication, and in particular, to a data processing method and a related apparatus.

### BACKGROUND

A point to multi-point (point to multi-point, P2MP) technology has been widely applied in the field of passive optical networks (passive optical networks, PONs), for example, application scenarios such as industrial campus interconnection, a vehicle-mounted optical network, an industrial optical network, and an edge data center.

A typical architecture of the passive optical network is described below. The passive optical network includes an optical line terminal (optical line terminal, OLT), an optical distribution network (optical distribution network, ODN), and a plurality of optical network units (optical network units, ONUs). The OLT serves as a primary node, and the OLT is connected to the plurality of ONUs through the ODN. The OLT receives service data of each ONU, and processes the service data.

However, how to process the service data to improve performance of the passive optical network is a problem worth considering.

### SUMMARY

This application provides a data processing method and a related apparatus, to perform different processing operations on data of different traffic types to help improve communication transmission performance and data processing performance of a passive optical network.

A first aspect of this application provides a data processing method, including:
An OLT receives a data frame that is sent by a first ONU and that carries service data. Then, the OLT determines a traffic type corresponding to the service data, where the traffic type includes east-west traffic or north-south traffic. The OLT performs a corresponding operation on the data frame in a processing manner corresponding to the traffic type, where a processing manner corresponding to the east-west traffic is different from a processing manner corresponding to the north-south traffic.

In the foregoing technical solution, in a process of processing the data frame, the OLT distinguishes the traffic type of the service data carried in the data frame, and performs the corresponding operation on the data frame in the processing manner corresponding to the traffic type. The processing manner corresponding to the east-west traffic is different from the processing manner corresponding to the north-south traffic. In this way, different processing operations are performed on data of different traffic types, to help improve communication transmission performance, data processing performance, security performance, and the like of a passive optical network.

In a possible implementation, that the OLT performs a corresponding operation on the data frame in a processing manner corresponding to the traffic type includes: If the traffic type is the east-west traffic, the OLT sends the data frame to a second ONU corresponding to the service data, where both the first ONU and the second ONU are included in a passive optical network managed by the OLT. Alternatively, if the traffic type is the north-south traffic, the OLT parses the data frame to obtain the service data. Then, the OLT sends the service data through a northbound interface of the OLT, or the OLT encapsulates the service data in a first encapsulation format, and sends encapsulated service data through a northbound interface of the OLT.

In this implementation, if the traffic type is the east-west traffic, the OLT does not need to perform deframing on the data frame, and the OLT may directly send the data frame to the second ONU. In this way, a process of deframing from a data frame (a PON frame) to service data (a service packet) and a process of framing from service data (a service packet) to a data frame (a PON frame) are avoided. In addition, a queue buffer process of a service packet (namely, service data) in two-level buffer queues, namely, an input buffer queue and an output buffer queue, of a forwarding unit of the OLT is also avoided, and a communication delay is greatly reduced. Therefore, in technical solutions of this application, the deframing process, the framing process, and the queue buffer process in the forwarding unit can be avoided, so that burden and energy consumption overheads of the OLT are effectively reduced, to improve efficiency of communication between ONUs in the passive optical network, and reduce a communication delay.

In another possible implementation, that the OLT sends the data frame to a second ONU includes: The OLT sends the data frame to the second ONU in a downlink data sending manner corresponding to the east-west traffic.

In this implementation, the OLT sends the data frame to the second ONU in the downlink data sending manner corresponding to the east-west traffic, to help the second ONU distinguish east-west traffic data and north-south traffic data.

In another possible implementation, that the OLT sends the data frame to the second ONU in a downlink data sending manner corresponding to the east-west traffic includes: The OLT sends the data frame to the second ONU via a first-type time domain resource and/or a first-type frequency domain resource. The first-type time domain resource is used by the OLT to send east-west traffic data to an online ONU in the passive optical network, and the first-type frequency domain resource is used by the OLT to send east-west traffic data to an online ONU in the passive optical network.

In this implementation, the OLT sends the data frame to the second ONU via the first-type time domain resource and/or the first-type frequency domain resource. The first-type time domain resource or the first-type frequency domain resource may be understood as a network slice, so that the east-west traffic data and the north-south traffic data are separated by using a slicing mechanism at a physical layer. The two types of data are isolated at the physical layer, the ONU, and the OLT for processing, and this helps improve data processing security of the passive optical network.

In another possible implementation, the method further includes: The OLT determines an online ONU in the passive optical network managed by the OLT. Then, the OLT sends first information to the first ONU, where the first information indicates the online ONU in the passive optical network managed by the OLT.

In this implementation, the OLT may determine the online ONU in the passive optical network managed by the OLT, and notify the online ONU in the passive optical network. This helps the online ONU determine whether a communication object of the online ONU is included in the passive optical network, to accurately determine a type of service data, and send the service data in a corresponding manner.

In another possible implementation, the first information is carried in downlink gigabit-capable passive optical network transmission convergence (GPON transmission convergence, GTC) field extension, optical network terminal management and control interface (optical management and control interface, OMCI) message extension, or physical layer operation, administration, and maintenance (physical layer operation, administration, and maintenance, PLOAM) message extension. In this implementation, some possible fields that may carry the first information are enumerated, to facilitate delivery of the first information and facilitate implementation of the solutions.

In another possible implementation, that the OLT determines a traffic type corresponding to the service data includes: The OLT determines the traffic type based on a time domain resource and/or a frequency domain resource used by the OLT to receive the data frame.

In this implementation, the OLT may determine the traffic type via the time domain resource and/or the frequency domain resource for receiving the data frame, so that the OLT distinguishes the east-west traffic data and the north-south traffic data. This helps the OLT perform the corresponding operation on the data frame in the processing manner corresponding to the traffic type, to perform different processing operations on service data of different traffic types, and improve the communication transmission performance and the data processing performance of the passive optical network.

In another possible implementation, that the OLT determines the traffic type based on a frequency domain resource used by the OLT to receive the data frame includes: If the frequency domain resource used by the OLT to receive the data frame is a second-type frequency domain resource, the OLT determines that the traffic type is the east-west traffic, where the second-type frequency domain resource is used by an online ONU in the passive optical network managed by the OLT to send east-west traffic data to the OLT. Alternatively, if the frequency domain resource used by the OLT to receive the data frame is a third-type frequency domain resource, the OLT determines that the traffic type is the north-south traffic, where the third-type frequency domain resource is used by an online ONU in the passive optical network managed by the OLT to send north-south traffic data to the OLT.

In this implementation, a specific manner in which the OLT distinguishes the traffic type with reference to the frequency domain resource for receiving the data frame is enumerated. The second-type frequency domain resource and the third-type frequency domain resource may be understood as two different network slices, and the traffic type corresponding to the service data is distinguished based on a network slice corresponding to the data frame.

In another possible implementation, before the OLT determines the traffic type based on the frequency domain resource used by the OLT to receive the data frame, the method further includes: The OLT determines a first allocation ratio, where the first allocation ratio is a ratio of the second-type frequency domain resource to the third-type frequency domain resource. Then, the OLT sends second information to the first ONU, where the second information indicates the first allocation ratio.

In this implementation, the OLT may determine the ratio of the second-type frequency domain resource to the third-type frequency domain resource, and then indicate the ratio to the first ONU, to help the first ONU determine the second-type frequency domain resource and the third-type frequency domain resource. This helps the first ONU send, during transmission of the data frame, the data frame by using the corresponding frequency domain resource with reference to the service data carried in the data frame. In this way, the OLT distinguishes service data of different traffic types, and performs different processing operations on the service data of the different traffic types.

In another possible implementation, the second information is carried in GTC field extension, OMCI message extension, or PLOAM message extension. In this implementation, some fields that may carry the second information are enumerated, to help the OLT send the second information, and no new message needs to be redefined to send the second information, to improve practicability of the solutions.

In another possible implementation, before the OLT determines the first allocation ratio, the first ONU sends a first request to the OLT, and the second ONU sends a second request to the OLT, where the first request is for requesting a frequency domain resource used by the first ONU to send east-west traffic data to the OLT, and the second request is for requesting a frequency domain resource used by the first ONU to send north-south traffic data to the OLT. The OLT determines the first allocation ratio based on the first request and the second request.

In this implementation, the OLT may configure an appropriate first allocation ratio for the first ONU based on the first request and the second request, so that the first ONU uses resources properly.

In another possible implementation, the first request is carried in field extension of an uplink PON frame, OMCI message extension, or PLOAM message extension, and the second request is carried in discrete multi-carrier modulation (discrete multiband, DRB) of the uplink PON frame. In this implementation, some fields that may carry the first request and the second request are enumerated, to facilitate implementation of the solutions. The first request and the second request may be carried in fields in some current messages or frames, so that no new message or new frame needs to be defined to carry the first request and the second request.

In another possible implementation, before the OLT determines the first allocation ratio, the OLT receives a third request and a fourth request that are sent by each online ONU of online ONUs in the passive optical network managed by the OLT. The third request is for requesting a frequency domain resource used by the online ONU to send east-west traffic to the OLT, and the fourth request is for requesting a frequency domain resource used by the online ONU to send north-south traffic to the OLT. The OLT determines the first allocation ratio based on the third request and the fourth request of each online ONU. In this implementation, the OLT may configure the first allocation ratio in a unified manner based on the third request and the fourth request of each online ONU, so that the ONU in the passive optical network uses resources properly, and a configuration process of the OLT is simplified.

In another possible implementation, that the OLT determines the traffic type based on a time domain resource used by the OLT to receive the data frame includes: If the time domain resource used by the OLT to receive the data frame is a second-type time domain resource, the OLT determines that the traffic type is the east-west traffic, where the second-type time domain resource is used by an online ONU in the passive optical network managed by the OLT to send east-west traffic data to the OLT. Alternatively, if the time domain resource used by the OLT to receive the data frame is a third-type time domain resource, the OLT determines that the traffic type is the north-south traffic, where the third-type time domain resource is used by an online ONU in the passive optical network managed by the OLT to send north-south traffic data to the OLT. In this implementation, a specific manner in which the OLT distinguishes the traffic type with reference to the time domain resource for receiving the data frame is enumerated. The second-type time domain resource and the third-type time domain resource may be understood as two different network slices, and the traffic type corresponding to the service data is distinguished based on a network slice corresponding to the data frame.

In another possible implementation, before the OLT determines the traffic type based on the time domain resource used by the OLT to receive the data frame, the method further includes: The OLT determines a second allocation ratio, where the second allocation ratio is a ratio of the second-type time domain resource to the third-type time domain resource. The OLT sends third information to the first ONU, where the third information indicates the second allocation ratio.

In this implementation, the OLT may determine the ratio of the second-type time domain resource to the third-type time domain resource, and then indicate the ratio to the first ONU, to help the first ONU determine the second-type time domain resource and the third-type time domain resource. This helps the first ONU send, during transmission of the data frame, the data frame by using the corresponding time domain resource with reference to the service data carried in the data frame. In this way, the OLT distinguishes traffic types corresponding to service data, and performs different processing operations on service data of different traffic types.

In another possible implementation, before the OLT determines the second allocation ratio, the OLT receives a fifth request and a sixth request from the first ONU, where the fifth request is for requesting a time domain resource used by the first ONU to send east-west traffic data to the OLT, and the sixth request is for requesting a time domain resource used by the first ONU to send north-south traffic data to the OLT. The OLT determines the second allocation ratio based on the fifth request and the sixth request. In this implementation, the OLT may configure an appropriate second allocation ratio for the first ONU based on the fifth request and the sixth request, so that the first ONU uses resources properly.

In another possible implementation, the fifth request is carried in field extension of an uplink PON frame, OMCI message extension, or PLOAM message extension, and the sixth request is carried in DRB of the uplink PON frame. In this implementation, some fields that may carry the fifth request and the sixth request are enumerated, to facilitate implementation of the solutions. The fifth request and the sixth request may be carried in fields in some current messages or frames, so that no new message or new frame needs to be defined to carry the fifth request and the sixth request.

In another possible implementation, before the OLT determines the second allocation ratio, the OLT receives a seventh request and an eighth request from each online ONU in the passive optical network managed by the OLT, where the seventh request is for requesting a time domain resource used by the online ONU to send east-west traffic data to the OLT, and the eighth request is for requesting a time domain resource used by the online ONU to send north-south traffic data to the OLT. The OLT determines the second allocation ratio based on the seventh request and the eighth request. In this implementation, the OLT may configure the first allocation ratio in a unified manner based on the seventh request and the eighth request of each online ONU, so that the ONU in the passive optical network uses resources properly, and a configuration process of the OLT is simplified.

A second aspect of this application provides a data processing method, including:
A first ONU generates a data frame. Then, the first ONU determines a traffic type corresponding to service data carried in the data frame, where the traffic type includes east-west traffic or north-south traffic. The first ONU sends the data frame to an OLT in an uplink data sending manner corresponding to the traffic type, where an uplink data sending manner corresponding to the east-west traffic is different from an uplink data sending manner corresponding to the north-south traffic.

In the foregoing technical solution, the first ONU may determine the traffic type corresponding to the service data carried in the data frame, and send the data frame to the OLT in the uplink data sending manner corresponding to the traffic type. The uplink data sending manner corresponding to the east-west traffic is different from the uplink data sending manner corresponding to the north-south traffic. This helps the OLT distinguish the traffic type of the service data carried in the data frame, and perform a corresponding operation on the data frame in a processing manner corresponding to the traffic type. In this way, different processing operations are performed on service data of different traffic types, to help improve communication transmission performance, data processing performance, security performance, and the like of a passive optical network.

In a possible implementation, if the traffic type is the east-west traffic, the first ONU sends the data frame to the OLT via a second-type frequency domain resource, where the second-type frequency domain resource is used by an online ONU in a passive optical network managed by the OLT to send east-west traffic data to the OLT. Alternatively, if the traffic type is the north-south traffic, the first ONU sends the data frame to the OLT via a third-type frequency domain resource, where the third-type frequency domain resource is used by an online ONU in a passive optical network managed by the OLT to send north-south traffic data to the OLT.

In this implementation, a specific implementation in which the first ONU sends the data frame when the traffic type is the east-west traffic or the north-south traffic is enumerated. The first ONU sends service data of different traffic types in differentiated manners via a frequency domain resource for sending the data frame, so that the OLT distinguishes the traffic types corresponding to the service data. The second-type frequency domain resource and the third-type frequency domain resource may be understood as two different network slices, and the traffic type corresponding to the service data is distinguished based on a network slice corresponding to the data frame.

In another possible implementation, that the first ONU determines a traffic type corresponding to service data carried in the data frame includes: The first ONU determines whether a device corresponding to the service data is an online ONU in the passive optical network managed by the OLT. If the device corresponding to the service data is the online ONU in the passive optical network managed by the OLT, the first ONU determines that the traffic type is the east-west traffic. If the device corresponding to the service data is not the online ONU in the passive optical network managed by the OLT, the first ONU determines that the traffic type is the north-south traffic.

In this implementation, a specific implementation in which the first ONU determines the traffic type is enumerated, to facilitate implementation of the solutions. Specifically, the first ONU may determine the traffic type depending on whether a device corresponding to a destination address of the service data is the online ONU in the passive optical network managed by the OLT. If the device corresponding to the destination address of the service data is the online ONU in the passive optical network managed by the OLT, it indicates that the traffic type is the east-west traffic. If the device corresponding to the destination address of the service data is not the online ONU in the passive optical network managed by the OLT, it indicates that the traffic type is the north-south traffic.

In another possible implementation, the method further includes: The first ONU receives first information from the OLT, where the first information indicates an online ONU in the passive optical network managed by a first OLT. In this implementation, the first ONU receives the first information from the OLT. This helps the online ONU determine whether a communication object of the online ONU is included in the passive optical network, to accurately determine a traffic type corresponding to service data, and send the service data in a corresponding manner.

In another possible implementation, the first information is carried in downlink GTC field extension, OMCI message extension, or PLOAM message extension. In this implementation, some possible fields that may carry the first information are enumerated, to facilitate delivery of first information and facilitate implementation of the solutions.

In another possible implementation, before the first ONU sends the data frame to the OLT in the uplink data sending manner corresponding to the traffic type, the first ONU receives second information from the OLT, where the second information indicates a first allocation ratio, and the first allocation ratio is a ratio of the second-type frequency domain resource to the third-type frequency domain resource. Then, the first ONU determines the second-type frequency domain resource of the first ONU and the third-type frequency domain resource of the first ONU based on the first allocation ratio.

In this implementation, the OLT may determine the ratio of the second-type frequency domain resource to the third-type frequency domain resource, and then indicate the ratio to the first ONU, to help the first ONU determine the second-type frequency domain resource and the third-type frequency domain resource. This helps the first ONU send, during transmission of the data frame, the data frame by using the corresponding frequency domain resource with reference to the service data carried in the data frame. In this way, the OLT distinguishes traffic types corresponding to service data, and performs different processing operations on service data of different traffic types.

In another possible implementation, before the first ONU sends the data frame to the OLT in the uplink data sending manner corresponding to the traffic type, the first ONU sends a first request and a second request to the OLT, where the first request is for requesting a frequency domain resource used by the first ONU to send east-west traffic data to the OLT, and the second request is for requesting a frequency domain resource used by the first ONU to send north-south traffic to the OLT. In this implementation, the first ONU may further send the first request and the second request to the OLT, so that the OLT configures an appropriate first allocation ratio for the first ONU, and the first ONU can use resources properly.

In another possible implementation, if the traffic type is the east-west traffic, the first ONU sends the data frame to the OLT via a second-type time domain resource, where the second-type time domain resource is used by an online ONU in a passive optical network managed by the OLT to send east-west traffic data to the OLT. Alternatively, if the traffic type is the north-south traffic, the first ONU sends the data frame to the OLT via a third-type time domain resource, where the third-type time domain resource is used by an online ONU in a passive optical network managed by the OLT to send north-south traffic data to the OLT.

In this implementation, another specific implementation in which the first ONU sends the data frame when the traffic type is the east-west traffic or the north-south traffic is enumerated. The first ONU sends service data of different traffic types in differentiated manners via a frequency domain resource for sending the data frame, so that the OLT distinguishes the traffic types corresponding to the service data. The second-type time domain resource and the third-type time domain resource may be understood as two different network slices, and the traffic type corresponding to the service data is distinguished based on a network slice corresponding to the data frame.

In another possible implementation, before the first ONU sends the data frame to the OLT in the uplink data sending manner corresponding to the traffic type, the method further includes: The first ONU receives third information from the OLT, where the third information indicates a second allocation ratio, and the second allocation ratio is a ratio of the second-type time domain resource to the third-type time domain resource. The first ONU determines the second-type time domain resource of the first ONU and the third-type time domain resource of the first ONU based on the second allocation ratio.

In this implementation, the OLT may determine the ratio of the second-type time domain resource to the third-type time domain resource, and then indicate the ratio to the first ONU, to help the first ONU determine the second-type time domain resource and the third-type time domain resource. This helps the first ONU send, during transmission of the data frame, the data frame by using the corresponding time domain resource with reference to the service data carried in the data frame. In this way, the OLT distinguishes traffic types of service data, and performs corresponding processing operations on data of different traffic types.

In another possible implementation, that the first ONU determines a traffic type corresponding to service data carried in the data frame includes: The first ONU determines whether a device corresponding to the service data is an online ONU in the passive optical network managed by the OLT. If the device corresponding to the service data is the online ONU in the passive optical network managed by the OLT, the first ONU determines that the traffic type is the east-west traffic. If the device corresponding to the service data is not the online ONU in the passive optical network managed by the OLT, the first ONU determines that the traffic type is the north-south traffic. In this implementation, a specific implementation in which the first ONU determines the traffic type is enumerated, to facilitate implementation of the solutions. Specifically, the first ONU may determine the traffic type depending on whether the device corresponding to the service data is the online ONU in the passive optical network managed by the OLT. If the device corresponding to the service data is the online ONU in the passive optical network managed by the OLT, it indicates that the traffic type is the east-west traffic. If the device corresponding to the service data is not the online ONU in the passive optical network managed by the OLT, it indicates that the traffic type is the north-south traffic.

A third aspect of this application provides a data processing method, including:
A second ONU receives, from an OLT, a data frame that carries service data. The second ONU determines, based on a time domain resource and/or a frequency domain resource used by the second ONU to receive the data frame, a traffic type corresponding to the service data, where the traffic type includes east-west traffic or north-south traffic.

In the foregoing technical solution, the second ONU may receive the data frame sent by the OLT, and determine, based on the time domain resource and/or the frequency domain resource for receiving the data frame, the traffic type corresponding to the service data, to distinguish east-west traffic data and north-south traffic data. This helps the second ONU perform corresponding operations on data of different traffic types.

In a possible implementation, that the second ONU determines, based on a time domain resource used by the second ONU to receive the data frame, a traffic type corresponding to the service data includes: If the time domain resource used by the second ONU to receive the data frame is a first-type time domain resource, the second ONU determines that the traffic type is the east-west traffic. Alternatively, if the time domain resource used by the second ONU to receive the data frame is a fourth-type time domain resource, the second ONU determines that the traffic type is the north-south traffic. The first-type time domain resource is used by the OLT to send east-west traffic data to an online ONU in a passive optical network managed by the OLT. The fourth-type time domain resource is used by the OLT to send north-south traffic data to an online ONU in the passive optical network managed by the OLT.

In this implementation, a specific implementation in which the second ONU determines the traffic type corresponding to the service data is enumerated, to distinguish the east-west traffic data and the north-south traffic data. The first-type time domain resource and the fourth-type time domain resource may be understood as network slices, so that the east-west traffic data and the north-south traffic data are separated by using a slicing mechanism at a physical layer. The two types of data are isolated at the physical layer, the ONU, and the OLT for processing, and this helps improve data processing security of the passive optical network.

In another possible implementation, that the second ONU determines, based on a frequency domain resource used by the second ONU to receive the data frame, a traffic type corresponding to the service data includes: If the frequency domain resource used by the second ONU to receive the data frame is a first-type frequency domain resource, the second ONU determines that the traffic type is the east-west traffic. Alternatively, if the frequency domain resource used by the second ONU to receive the data frame is a fourth-type frequency domain resource, the second ONU determines that the traffic type is the north-south traffic.

In this implementation, another specific implementation in which the second ONU determines the traffic type corresponding to the service data is enumerated, to distinguish the east-west traffic data and the north-south traffic data. The first-type frequency domain resource or the fourth-type frequency domain resource may be understood as a network slice, so that the east-west traffic data and the north-south traffic data are separated by using a slicing mechanism at a physical layer. The two types of data are isolated at the physical layer, the ONU, and the OLT for processing, and this helps improve data processing security of the passive optical network.

In another possible implementation, if the traffic type is the east-west traffic, the second ONU stores the service data in an east-west traffic buffer area. Alternatively, if the traffic type is the north-south traffic, the second ONU stores the service data in a north-south traffic buffer area.

In this implementation, the second ONU distinguishes the traffic type corresponding to the service data, and may store the service data in a corresponding buffer area based on the traffic type, to implement differentiated buffer of service data of different traffic types.

A fourth aspect of this application provides an optical communication apparatus, including: a receiving module, configured to receive, from a first ONU, a data frame that carries service data; a determining module, configured to determine a traffic type corresponding to the service data, where the traffic type includes east-west traffic or north-south traffic; and a processing module, configured to perform a corresponding operation on the data frame in a processing manner corresponding to the traffic type, where a processing manner corresponding to the east-west traffic is different from a processing manner corresponding to the north-south traffic.

In a possible implementation, the processing module is specifically configured to: if the traffic type is the east-west traffic, send the data frame to a second ONU, where the second ONU is a device corresponding to the service data, and both the first ONU and the second ONU are included in a passive optical network managed by the optical communication apparatus; or if the traffic type is the north-south traffic, parse the data frame to obtain the service data, and send the service data through a northbound interface of the optical communication apparatus, or encapsulate the service data in a first encapsulation format, and send encapsulated service data through a northbound interface of the optical communication apparatus.

In another possible implementation, the processing module is further configured to: determine an online ONU in the passive optical network managed by the optical communication apparatus. The communication apparatus further includes a sending module. The sending module is configured to: send first information to the first ONU, where the first information indicates the online ONU in the passive optical network managed by the optical communication apparatus.

In another possible implementation, the first information is carried in downlink GTC field extension, OMCI message extension, or PLOAM message extension.

In another possible implementation, the processing module is specifically configured to: send the data frame to the second ONU in a downlink data sending manner corresponding to the east-west traffic.

In another possible implementation, the processing module is specifically configured to: send the data frame to the second ONU via a first-type time domain resource and/or a first-type frequency domain resource, where the first-type time domain resource is used by the optical communication apparatus to send east-west traffic data to an online ONU in the passive optical network, and the first-type frequency domain resource is used by the optical communication apparatus to send east-west traffic data to an online ONU in the passive optical network.

In another possible implementation, the determining module is specifically configured to: determine the traffic type based on a time domain resource and/or a frequency domain resource used by the optical communication apparatus to receive the data frame.

In another possible implementation, the determining module is specifically configured to: if the frequency domain resource used by the optical communication apparatus to receive the data frame is a second-type frequency domain resource, determine that the traffic type is the east-west traffic, where the second-type frequency domain resource is used by an online ONU in the passive optical network managed by the optical communication apparatus to send east-west traffic data to the optical communication apparatus; or if the frequency domain resource used by the optical communication apparatus to receive the data frame is a third-type frequency domain resource, determine that the traffic type is the north-south traffic, where the third-type frequency domain resource is used by an online ONU in the passive optical network managed by the optical communication apparatus to send north-south traffic data to the optical communication apparatus.

In another possible implementation, the determining module is further configured to: determine a first allocation ratio, where the first allocation ratio is a ratio of the second-type frequency domain resource to the third-type frequency domain resource. The optical communication apparatus further includes a sending module. The sending module is configured to send second information to the first ONU, where the second information indicates the first allocation ratio.

In another possible implementation, the second information is carried in GTC field extension, OMCI message extension, or PLOAM message extension.

In another possible implementation, the receiving module is further configured to: receive a first request and a second request from the first ONU, where the first request is for requesting a frequency domain resource used by the first ONU to send east-west traffic data to the optical communication apparatus, and the second request is for requesting a frequency domain resource used by the first ONU to send north-south traffic data to the optical communication apparatus. The determining module is specifically configured to: determine the first allocation ratio based on the first request and the second request.

In another possible implementation, the first request is carried in field extension of an uplink PON frame, OMCI message extension, or PLOAM message extension, and the second request is carried in a DRB field of the uplink PON frame.

In another possible implementation, the receiving module is further configured to: receive a third request and a fourth request that are sent by each online ONU of online ONUs in the passive optical network managed by the optical communication apparatus, where the third request is for requesting a frequency domain resource used by the online ONU to send east-west traffic to the optical communication apparatus, and the fourth request is for requesting a frequency domain resource used by the online ONU to send north-south traffic to the optical communication apparatus. The determining module is specifically configured to: determine the first allocation ratio based on the third request and the fourth request of each online ONU.

In another possible implementation, the determining module is specifically configured to: if the time domain resource used by the optical communication apparatus to receive the data frame is a second-type time domain resource, determine that the traffic type is the east-west traffic, where the second-type time domain resource is used by an online ONU in the passive optical network managed by the optical communication apparatus to send east-west traffic data to the optical communication apparatus; or if the time domain resource used by the optical communication apparatus to receive the data frame is a third-type time domain resource, determine that the traffic type is the north-south traffic, where the third-type time domain resource is used by an online ONU in the passive optical network managed by the optical communication apparatus to send north-south traffic data to the optical communication apparatus.

In another possible implementation, the determining module is further configured to: determine a second allocation ratio, where the second allocation ratio is a ratio of the second-type time domain resource to the third-type time domain resource. The optical communication apparatus further includes a sending module. The sending module is configured to send third information to the first ONU, where the third information indicates the second allocation ratio.

In another possible implementation, the receiving module is further configured to: receive a fifth request and a sixth request from the first ONU, where the fifth request is for requesting a time domain resource used by the first ONU to send east-west traffic data to the optical communication apparatus, and the sixth request is for requesting a time domain resource used by the first ONU to send north-south traffic data to the optical communication apparatus. The determining module is specifically configured to: determine the second allocation ratio based on the fifth request and the sixth request.

In another possible implementation, the fifth request is carried in field extension of an uplink PON frame, OMCI message extension, or PLOAM message extension, and the sixth request is carried in a DRB field of the uplink PON frame.

In another possible implementation, the receiving module is further configured to: receive a seventh request and an eighth request from each online ONU in the passive optical network managed by the optical communication apparatus, where the seventh request is for requesting a time domain resource used by the online ONU to send east-west traffic data to the optical communication apparatus, and the eighth request is for requesting a time domain resource used by the online ONU to send north-south traffic data to the optical communication apparatus. The determining module is specifically configured to: determine the second allocation ratio based on the seventh request and the eighth request.

A fifth aspect of this application provides an optical communication apparatus, including: a generation module, configured to generate a data frame; a determining module, configured to determine a traffic type corresponding to service data carried in the data frame, where the traffic type includes east-west traffic or north-south traffic; and a sending module, configured to send the data frame to an OLT in an uplink data sending manner corresponding to the traffic type, where an uplink data sending manner corresponding to the east-west traffic is different from an uplink data sending manner corresponding to the north-south traffic.

In a possible implementation, if the traffic type is the east-west traffic, the sending module is specifically configured to: send the data frame to the OLT via a second-type frequency domain resource, where the second-type frequency domain resource is a frequency domain resource used by an online ONU in a passive optical network managed by the OLT to send east-west traffic data to the OLT. Alternatively, if the traffic type is the north-south traffic, the sending module is specifically configured to: send the data frame to the OLT via a third-type frequency domain resource, where the third-type frequency domain resource is a frequency domain resource used by an online ONU in a passive optical network managed by the OLT to send north-south traffic data to the OLT.

In another possible implementation, the determining module is specifically configured to: determine whether a device corresponding to the service data is an online ONU in the passive optical network managed by the OLT; and if the device corresponding to the service data is the online ONU in the passive optical network managed by the OLT, determine that the traffic type is the east-west traffic; or if the device corresponding to the service data is not the online ONU in the passive optical network managed by the OLT, determine that the traffic type is the north-south traffic.

In another possible implementation, the optical communication apparatus further includes a receiving module. The receiving module is configured to receive first information from the OLT, where the first information indicates the online ONU in the passive optical network managed by a first OLT.

In another possible implementation, the first information is carried in downlink GTC field extension, OMCI message extension, or PLOAM message extension.

In another possible implementation, the optical communication apparatus further includes a receiving module. The receiving module is configured to receive second information from the OLT, where the second information indicates a first allocation ratio, and the first allocation ratio is a ratio of the second-type frequency domain resource to the third-type frequency domain resource. The determining module is further configured to determine the second-type frequency domain resource of the optical communication apparatus and the third-type frequency domain resource of the optical communication apparatus based on the first allocation ratio.

In another possible implementation, the sending module is further configured to: send a first request and a second request to the OLT, where the first request is for requesting a frequency domain resource used by the optical communication apparatus to send east-west traffic data to the OLT, and the second request is for requesting a frequency domain resource used by the optical communication apparatus to send north-south traffic to the OLT.

In another possible implementation, the sending module is specifically configured to: if the traffic type is the east-west traffic, send the data frame to the OLT via a second-type time domain resource, where the second-type time domain resource is used by an online ONU in a passive optical network managed by the OLT to send east-west traffic data to the OLT; or if the traffic type is the north-south traffic, the sending module is specifically configured to: send the data frame to the OLT via a third-type time domain resource, where the third-type time domain resource is used by an online ONU in a passive optical network managed by the OLT to send north-south traffic data to the OLT.

In another possible implementation, the optical communication apparatus further includes a receiving module. The receiving module is configured to receive third information from the OLT, where the third information indicates a second allocation ratio, and the second allocation ratio is a ratio of the second-type time domain resource to the third-type time domain resource; and determine the second-type time domain resource of the optical communication apparatus and the third-type time domain resource of the optical communication apparatus based on the second allocation ratio.

A sixth aspect of this application provides an optical communication apparatus, including:
a receiving module, configured to receive a data frame from an OLT, where the data frame carries service data;
a determining module, configured to determine, based on a time domain resource and/or a frequency domain resource used by the optical communication apparatus to receive the data frame, a traffic type corresponding to the service data, where the traffic type includes east-west traffic or north-south traffic.

In a possible implementation, the determining module is specifically configured to: if the time domain resource used by the optical communication apparatus to receive the data frame is a first-type time domain resource, determine that the traffic type is the east-west traffic; or if the time domain resource used by the optical communication apparatus to receive the data frame is a fourth-type time domain resource, determine that the traffic type is the north-south traffic. The first-type time domain resource is used by the OLT to send east-west traffic data to an online ONU in a passive optical network managed by the OLT. A first-type frequency domain resource is used by the OLT to send east-west traffic data to an online ONU in the passive optical network managed by the OLT.

In another possible implementation, the determining module is specifically configured to: if the frequency domain resource used by the optical communication apparatus to receive the data frame is a first-type frequency domain resource, determine that the traffic type is the east-west traffic; or if the frequency domain resource used by the optical communication apparatus to receive the data frame is a fourth-type frequency domain resource, determine that the traffic type is the north-south traffic.

In another possible implementation, the optical communication apparatus further includes a storage module. The storage module is configured to: if the traffic type is the east-west traffic, store the service data in an east-west traffic buffer area; or if the traffic type is the north-south traffic, store the service data in a north-south traffic buffer area.

A seventh aspect of this application provides an optical communication apparatus. The optical communication apparatus includes a processor. The processor is configured to call and run a computer program stored in a memory, to enable the processor to implement any implementation of any one of the first aspect and the second aspect.

Optionally, the optical communication apparatus further includes a transceiver. The processor is further configured to control the transceiver to send and receive a signal.

Optionally, the optical communication apparatus includes the memory. The memory stores the computer program.

An eighth aspect of this application provides a computer program product including instructions. When the computer program product runs on a computer, the computer is enabled to perform any implementation of any one of the first aspect and the second aspect.

A ninth aspect of this application provides a computer-readable storage medium, including computer instructions. When the computer instructions are run on a computer, the computer is enabled to perform any implementation of any one of the first aspect and the second aspect.

A tenth aspect of this application provides a chip apparatus, including a processor. The processor is configured to be connected to a memory, and call a program stored in the memory, to enable the processor to perform any implementation of any one of the first aspect and the second aspect.

An eleventh aspect of this application provides a communication system. The communication system includes the optical communication apparatus according to the third aspect and the optical communication apparatus according to the fourth aspect.

Optionally, the communication system further includes the optical communication apparatus according to the fifth aspect.

It can be learned from the foregoing technical solutions that embodiments of this application have the following advantages:
It can be learned from the foregoing technical solutions that the OLT receives, from the first ONU, the data frame that carries the service data. Then, the OLT determines the traffic type corresponding to the service data, where the traffic type is the east-west traffic or the north-south traffic. The OLT performs a corresponding operation on the data frame in a processing manner corresponding to the traffic type, where a processing manner corresponding to the east-west traffic is different from a processing manner corresponding to the north-south traffic. It can be learned that, in the technical solutions of this application, the OLT distinguishes, in a data frame processing process, the traffic type of the service data carried in the data frame, and performs a corresponding operation on the data frame in a processing manner corresponding to the traffic type. In this way, different processing operations are performed by the OLT on service data of different traffic types, to help improve communication transmission performance, data processing performance, security performance, and the like of a passive optical network.

### BRIEF DESCRIPTION OF DRAWINGS

FIG. 1 is a diagram of a communication system to which an embodiment of this application is applied;
FIG. 2 is a diagram of processing service data by an OLT;
FIG. 3 is a first diagram of a data processing method according to an embodiment of this application;
FIG. 4 is a diagram of a scenario of a data processing method according to an embodiment of this application;
FIG. 5 is a diagram of another scenario of a data processing method according to an embodiment of this application;
FIG. 6 is a second diagram of a data processing method according to an embodiment of this application;
FIG. 7 is a third diagram of a data processing method according to an embodiment of this application;
FIG. 8 is a fourth diagram of a data processing method according to an embodiment of this application;
FIG. 9 is a fifth diagram of a data processing method according to an embodiment of this application;
FIG. 10 is a diagram of a structure of an OLT according to an embodiment of this application;
FIG. 11 is a diagram of a structure of an ONU according to an embodiment of this application;
FIG. 12 is a diagram of a first structure of an optical communication apparatus according to an embodiment of this application;
FIG. 13 is a diagram of a second structure of an optical communication apparatus according to an embodiment of this application;
FIG. 14 is a diagram of a third structure of an optical communication apparatus according to an embodiment of this application; and
FIG. 15 is a diagram of a fourth structure of an optical communication apparatus according to an embodiment of this application.

### DESCRIPTION OF EMBODIMENTS

Embodiments of this application provide a data processing method and a related apparatus, to perform different processing operations on data of different traffic types by an OLT, so as to help improve communication transmission performance, data processing performance, security performance, and the like of a passive optical network.

The technical solutions in embodiments of this application are clearly and completely described below with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application means that a specific feature, structure or characteristic described in combination with this embodiment is included in one or more embodiments of this application. Therefore, statements such as "in an embodiment", "in some embodiments", "in some other embodiments", and "in some further embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "plurality of" means two or more. "At least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c. a, b, and c may be singular or plural.

Related concepts in embodiments of this application are described below.

A passive optical network (passive optical network, PON) indicates that an optical distribution network (optical distribution network, ODN) is deployed between an OLT and an ONU, without any active electronic device.

The technical solutions in embodiments of this application may be applied to compatibility of various PON systems. The PON systems include, for example, a next-generation PON (next-generation PON, NG-PON), an NG-PON1, an NG-PON2, a gigabit-capable PON (gigabit-capable PON, GPON), a 10 gigabit per second PON (10 gigabit per second PON, XG-PON), a 10-gigabit-capable symmetric passive optical network (10-gigabit-capable symmetric passive optical network, XGS-PON), an Ethernet PON (Ethernet PON, EPON), a 10 gigabit per second EPON (10 gigabit per second EPON, 10G-EPON), a next-generation EPON (next-generation EPON, NG-EPON), a wavelength-division multiplexing (wavelength-division multiplexing, WDM) PON, a time wavelength division multiplexing (time wavelength division multiplexing, TWDM) PON, a point-to-point (point-to-point, P2P) WDM PON (P2P-WDM PON), an asynchronous transfer mode PON (asynchronous transfer mode PON, APON), a broadband PON (broadband PON, BPON), a 25 gigabit per second PON (25 gigabit per second PON, 25G-PON), a 50 gigabit per second PON (50 gigabit per second PON, 50G-PON), a 100 gigabit per second PON (100 gigabit per second PON, 100G-PON), a 25 gigabit per second EPON (25 gigabit per second EPON, 25G-EPON), a 50 gigabit per second EPON (50 gigabit per second EPON, 50G-EPON), a 100 gigabit per second EPON (100 gigabit per second EPON, 100G-EPON), and a GPON or an EPON with another rate.

An ODN is a fiber-to-the-home cable network based on a PON device. A function of the ODN is to provide an optical transmission channel between an OLT and an ONU.

North-south traffic indicates that a traffic type corresponding to service data sent by an ONU to a communication object is the north-south traffic when the communication object of the ONU is located outside a passive optical network managed by an OLT.

East-west traffic indicates that a traffic type corresponding to service data sent by an ONU to a communication object is the east-west traffic when the communication object of the ONU is included in a passive optical network managed by an OLT.

An ONU in a passive optical network managed by an OLT indicates that the ONU has performed a registration process on the OLT, and the OLT may control the ONU. For example, the OLT controls the ONU to go online, go offline, perform communication transmission, and so on.

An online ONU is an ONU in a passive optical network managed by an OLT, and the ONU has performed a registration process on the OLT. The OLT controls the ONU to be in an online state, and the OLT may schedule the ONU.

Currently, a point to multi-point technology has been widely applied in the field of PONs, for example, application scenarios such as industrial campus interconnection, a vehicle-mounted optical network, an industrial optical network, and an edge data center.

In a passive optical network, an OLT serves as a primary node, and the OLT is connected to a plurality of ONUs through an ODN. The OLT receives service data of each ONU, and processes the service data. The OLT serves as a primary node, and the OLT is connected to a plurality of ONUs through the ODN. The OLT receives service data of each ONU, and processes the service data.

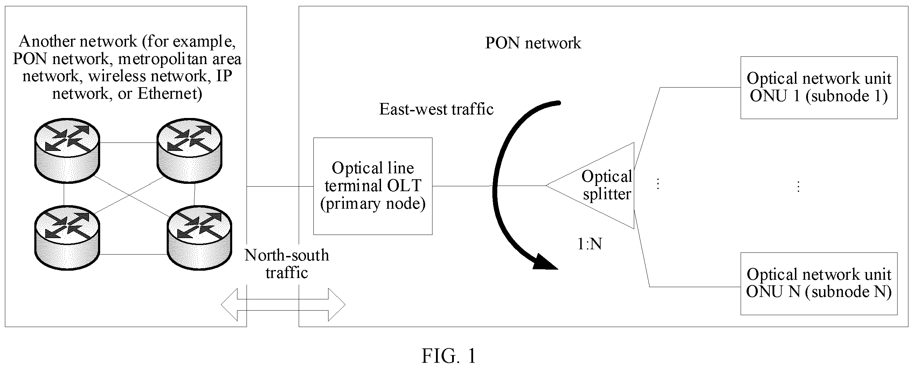

FIG. 1 is a diagram of a communication system according to an embodiment of this application. Refer to FIG. 1. A passive optical network is connected to another network through an OLT (a primary node). The another network may include a passive optical network, a metropolitan area network, a wireless network, an Ethernet, an Internet protocol (Internet protocol, IP) network, or the like. As shown in FIG. 1, the OLT (primary node) is connected to each ONU (subnode) through a tree-shaped optical fiber link with an optical splitter. The OLT may receive service data of each ONU, and process the service data. However, how to process service data of different traffic types to improve performance of the passive optical network is a problem worth considering.

For example, a traffic type in the passive optical network may include two types: north-south traffic and east-west traffic. In a process of processing and forwarding service data, the OLT does not distinguish the north-south traffic data and the east-west traffic data, in other words, does not separately process the north-south traffic data and the east-west traffic data. This results in poor performance of the passive optical network.

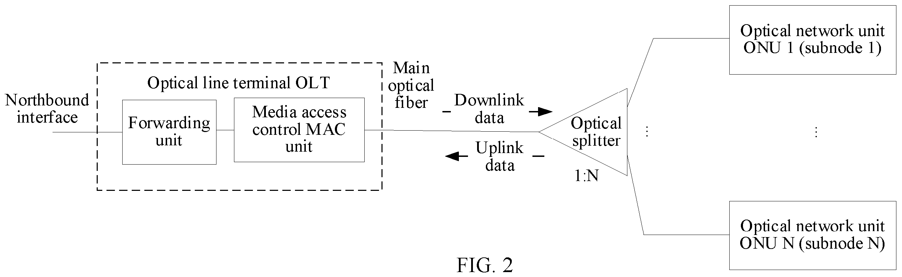

A current process of processing service data by an OLT is described below with reference to FIG. 2.

Refer to FIG. 2. The OLT includes a forwarding unit and a media access control (media access control, MAC) unit. For a downlink service packet, the forwarding unit of the OLT first reads a header of the service packet, to identify a subnode to which the service packet belongs. Then, the forwarding unit of the OLT sends the service packet to the MAC unit. The MAC unit adds a corresponding gigabit-capable passive optical network encapsulation method (GPON encapsulation method, GEM) frame header to the service packet, and then encapsulates the service packet into a GTC frame of a passive optical network for transmission.

For an uplink service packet, the MAC unit of the OLT first extracts a service packet from an uplink PON burst frame sent by a subnode, and reassembles the service packet. Then, the MAC unit sends the service packet to the forwarding unit. The forwarding unit determines, based on a header of the service packet, to route the service packet to a downlink subnode or a northbound interface. For example, a subnode N sends the uplink PON burst frame, and the MAC unit parses the uplink PON burst frame to obtain the service packet, and sends the service packet to the forwarding unit. If a destination address of the service packet is a subnode (for example, a subnode 1) in the passive optical network managed by the OLT, the forwarding unit may return the service packet to the MAC unit, and the MAC unit adds a corresponding GEM frame header to the service packet, and encapsulates the service packet into a downlink GTC frame of the passive optical network for transmission. If the destination address of the service packet is a device in another network, the forwarding unit may send the service packet through the northbound interface.

It can be learned that, an uplink burst PON frame that carries east-west traffic data is communicated between two subnodes in the passive optical network. For example, the subnode 1 sends an uplink burst PON frame to the subnode N. The uplink PON frame carries east-west traffic data, and the east-west traffic data may also be referred to as a service packet or service data. The service packet is sent and received four times. Specifically, the subnode 1 sends the uplink burst PON frame to the OLT. The MAC unit of the OLT performs a deframing operation on the uplink burst PON frame, to obtain the service packet. Then, the MAC unit of the OLT sends the service packet to the forwarding unit of the OLT. The forwarding unit of the OLT determines that a device corresponding to a destination address of the service packet is the subnode N, and the forwarding unit of the OLT may forward the service packet to the MAC unit of the OLT. The MAC unit of the OLT adds a corresponding GEM frame header to the service packet, encapsulates the service packet into a downlink GTC frame of the passive optical network, and transmits the downlink GTC frame to the subnode N. In addition, the service packet undergoes an input queue process and an output queue buffer process of a packet in the forwarding unit of the OLT. It can be learned that, for the east-west traffic data, the foregoing technical solution causes a large quantity of unnecessary delays, resulting in a high communication delay. In addition, in the foregoing technical solution, an additional remapping process between the uplink burst PON frame and the service packet is performed, and this causes a waste of energy consumption. This results in poor performance of the passive optical network.

The technical solutions of this application are described below with reference to specific embodiments.

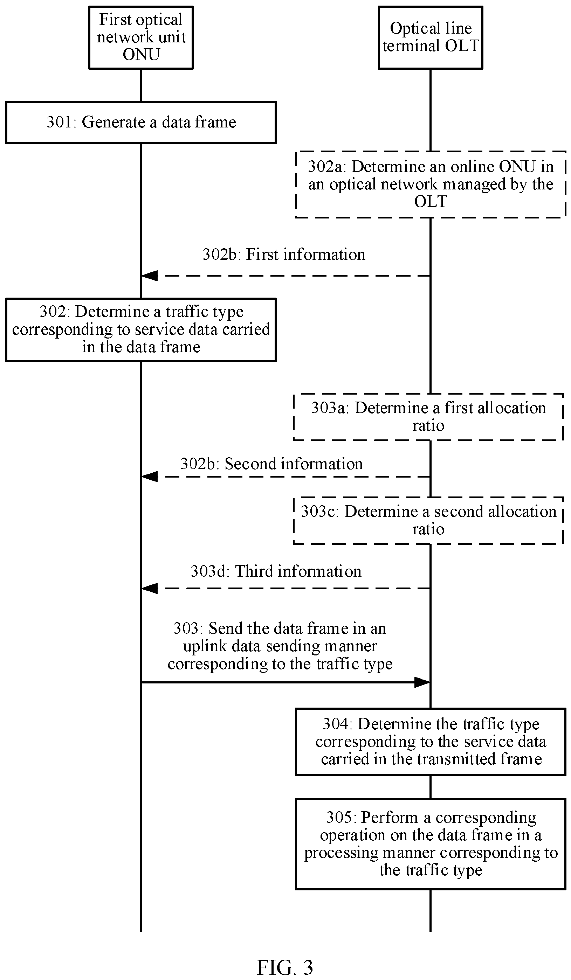

FIG. 3 is a diagram of an embodiment of a data processing method according to an embodiment of this application. Refer to FIG. 3. The data processing method includes the following steps.

301: A first ONU generates a data frame.

The data frame carries service data. The service data may be an IP packet or an Ethernet packet. This is not specifically limited in this application.

Optionally, the service data includes a destination address, and a device corresponding to the destination address is a communication object of the first ONU.

Optionally, the data frame may also be referred to as an uplink PON burst frame.

302: The first ONU determines a traffic type corresponding to the service data carried in the data frame, where the traffic type includes east-west traffic or north-south traffic.

Specifically, the first ONU determines the destination address of the service data. If the device (which may be understood as the communication object of the first ONU) corresponding to the destination address of the service data is an online ONU in a passive optical network managed by an OLT, the first ONU may determine that the traffic type corresponding to the service data is the east-west traffic. If the device (which may be understood as the communication object of the first ONU) corresponding to the destination address of the service data is a device outside the passive optical network managed by the OLT, the first ONU may determine that the traffic type corresponding to the service data is the north-south traffic.

Optionally, the embodiment shown in FIG. 3 further includes step 302a and step 302b. Step 302a and step 302b may be performed before step 302.

302a: The OLT determines an online ONU in the passive optical network managed by the OLT.

In a possible implementation, the OLT may send a specific instruction to an ONU in the passive optical network managed by the OLT. Then, the OLT receives, within a specific time period, a feedback message for the specific instruction from the ONU. The ONU that sends the feedback message to the OLT within the specific time period may be understood as the online ONU. Therefore, the OLT may determine the online ONU in the passive optical network managed by the OLT.

302b: The OLT sends first information to the first ONU, and correspondingly, the first ONU receives the first information from the OLT.

The first information indicates the online ONU in the passive optical network managed by the OLT. Specifically, the OLT may broadcast the first information, so that all online ONUs in the passive optical network managed by the OLT receive the first information, to help determine the online ONU in the passive optical network managed by the OLT.

Optionally, the first information is carried in GTC field extension, PLOAM message extension, or OMCI message extension. This is not specifically limited in this application.

303: The first ONU sends the data frame to the OLT in an uplink data sending manner corresponding to the traffic type, where an uplink data sending manner corresponding to the east-west traffic is different from an uplink data sending manner corresponding to the north-south traffic.

Several possible implementations of step 303 are described below.

Implementation 1: If the traffic type is the east-west traffic, that the first ONU sends the data frame to the OLT in an uplink data sending manner corresponding to the traffic type includes: The first ONU sends the data frame to the OLT via a second-type frequency domain resource. If the traffic type is the north-south traffic, that the first ONU sends the data frame to the OLT in an uplink data sending manner corresponding to the traffic type includes: The first ONU sends the data frame to the OLT via a third-type frequency domain resource.

The second-type frequency domain resource is used by an online ONU in the passive optical network managed by the OLT to send east-west traffic data to the OLT. The third-type frequency domain resource is used by an online ONU in the passive optical network managed by the OLT to send north-south traffic data to the OLT. A frequency band corresponding to the second-type frequency domain resource is different from a frequency band corresponding to the third-type frequency domain resource. For example, the frequency band corresponding to the second-type frequency domain resource may be a low frequency band, and the frequency band corresponding to the third-type frequency domain resource may be a high frequency band. Alternatively, the frequency band corresponding to the second-type frequency domain resource may be a high frequency band, and the frequency band corresponding to the third-type frequency domain resource is a low frequency band. The first ONU may modulate, in a discrete multi-carrier modulation (discrete multiband, DMB) manner or an orthogonal frequency division multiplexing (orthogonal frequency division multiplexing, OFDM) modulation manner, the data frame to a corresponding frequency domain resource for transmission.

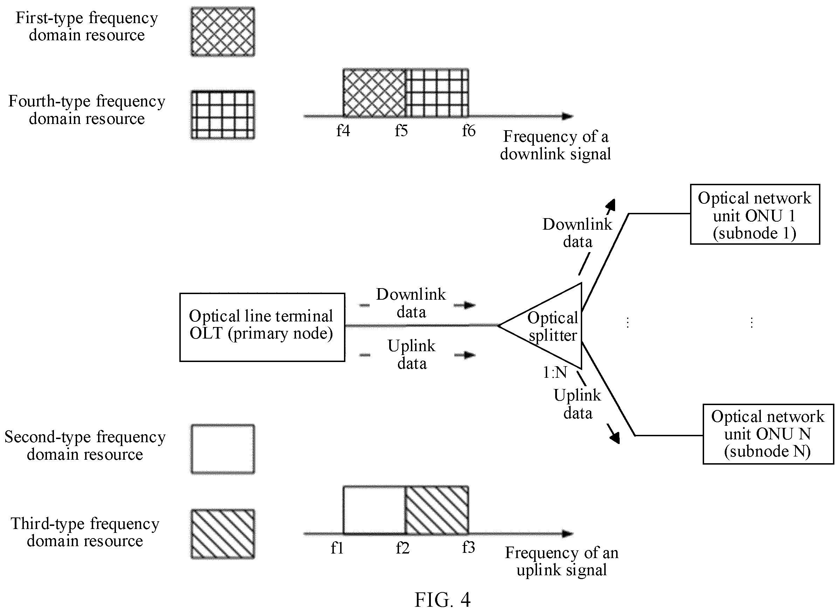

Refer to FIG. 4. The first ONU is a subnode N. For the subnode N, a frequency domain resource of the subnode N includes a second-type frequency domain resource and a third-type frequency domain resource. A frequency band corresponding to the second-type frequency domain resource is different from a frequency band corresponding to the third-type frequency domain resource. The frequency band corresponding to the second-type frequency domain resource may be a frequency band between frequency f1 and frequency f2. The frequency band corresponding to the third-type frequency domain resource may be a frequency band between the frequency f2 and frequency f3. If the traffic type corresponding to the service data is the east-west traffic, in other words, the device corresponding to the destination address of the service data is the online ONU in the passive optical network managed by the OLT, the subnode N may send the data frame to the OLT via the second-type frequency domain resource. If the traffic type corresponding to the service data is the north-south traffic, in other words, the device corresponding to the destination address of the service data is the online ONU in the passive optical network managed by the OLT, the subnode N may send the data frame to the OLT via the third-type frequency domain resource.

It should be noted that the second-type frequency domain resource and the third-type frequency domain resource may be understood as a network slice separately, so that the east-west traffic data and the north-south traffic data are separated by using a slicing mechanism at a physical layer. The two types of data are isolated at the physical layer, the ONU, and the OLT for processing, and this helps improve data processing security of the passive optical network.

Based on the implementation 1, optionally, the embodiment shown in FIG. 3 further includes step 303a and step 303b. Step 303a and step 303b may be performed before step 303.

303a: The OLT determines a first allocation ratio, where the first allocation ratio is a ratio of the second-type frequency domain resource to the third-type frequency domain resource.

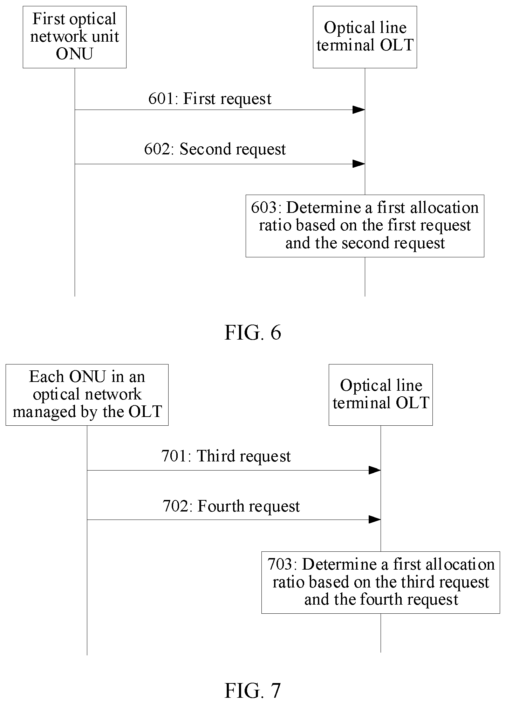

There are a plurality of determining manners of the OLT in step 303a. For details, refer to related descriptions of embodiments shown in FIG. 6 and FIG. 7, and the details are not described herein again.

303b: The OLT sends second information to the first ONU, and correspondingly, the first ONU receives the second information from the OLT.

The second information indicates the first allocation ratio. Correspondingly, the first ONU may determine the second-type frequency domain resource of the first ONU and the third-type frequency domain resource of the first ONU based on the first allocation ratio.

Optionally, the second information is carried in GTC field extension, OMCI message extension, or PLOAM message extension. This is not specifically limited in this application.

Implementation 2: If the traffic type is the east-west traffic, that the first ONU sends the data frame to the OLT in an uplink data sending manner corresponding to the traffic type includes: The first ONU sends the data frame to the OLT via a second-type time domain resource. If the traffic type is the north-south traffic, that the first ONU sends the data frame to the OLT in an uplink data sending manner corresponding to the traffic type includes: The first ONU sends the data frame to the OLT via a third-type time domain resource.

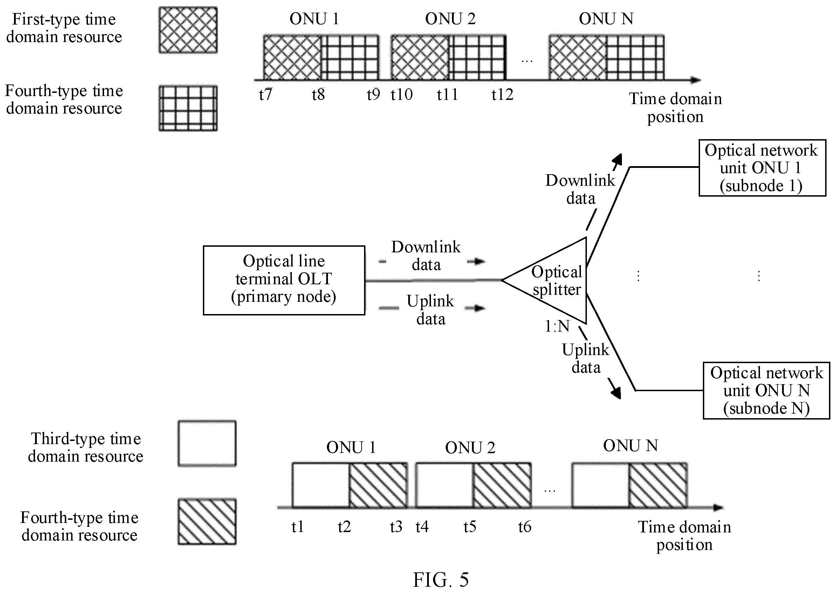

The second-type time domain resource is used by an online ONU in the passive optical network managed by the OLT to send east-west traffic data to the OLT. The third-type time domain resource is used by an online ONU in the passive optical network managed by the OLT to send north-south traffic data to the OLT. A time domain position corresponding to the second-type time domain resource is different from a time domain position corresponding to the third-type time domain resource. For example, refer to FIG. 5. The first ONU is an ONU 1. For the ONU 1, a time domain resource of the ONU 1 includes a second-type time domain resource and a third-type time domain resource. A time domain position corresponding to the second-type time domain resource is different from a time domain position corresponding to the third-type time domain resource. Within a period of time, for the ONU 1, the time domain position corresponding to the second-type time domain resource includes a time period between t1 and t2, and the time domain position corresponding to the third-type time domain resource includes a time period between t2 and t3. If the traffic type corresponding to the service data is the east-west traffic, in other words, the device corresponding to the destination address of the service data is the online ONU in the passive optical network managed by the OLT, the ONU 1 may send the data frame to the OLT via the second-type time domain resource. If the traffic type corresponding to the service data is the north-south traffic, in other words, the device corresponding to the destination address of the service data is the online ONU in the passive optical network managed by the OLT, the ONU 1 may send the data frame to the OLT via the third-type time domain resource.

It should be noted that the second-type time domain resource and the third-type time domain resource may be understood as a network slice separately, so that the east-west traffic data and the north-south traffic data are separated by using a slicing mechanism at a physical layer. The two types of data are isolated at the physical layer, the ONU, and the OLT for processing, and this helps improve data processing security of the passive optical network.

Based on the implementation 2, optionally, the embodiment shown in FIG. 3 further includes step 303c and step 303d. Step 303c and step 303d may be performed before step 303.

303c: The OLT determines a second allocation ratio, where the second allocation ratio is a ratio of the second-type time domain resource to the third-type time domain resource.

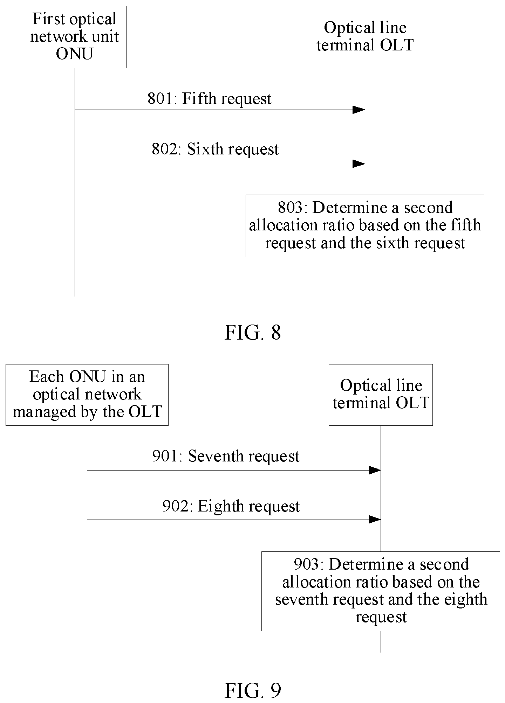

There are a plurality of determining manners of the OLT in step 303c. For details, refer to related descriptions of embodiments shown in FIG. 8 and FIG. 9, and the details are not described herein again.

303d: The OLT sends third information to the first ONU, where the third information indicates the second allocation ratio.

Correspondingly, the first ONU may determine the second-type time domain resource of the first ONU and the third-type time domain resource of the first ONU based on the second allocation ratio.

Optionally, the third information is carried in GTC field extension, OMCI message extension, or PLOAM message extension. This is not specifically limited in this application.

Implementation 3: If the traffic type is the east-west traffic, that the first ONU sends the data frame to the OLT in an uplink data sending manner corresponding to the traffic type includes: The first ONU sends the data frame to the OLT via a first-type time-frequency resource. If the traffic type is the north-south traffic, the uplink data sending manner corresponding to the traffic type includes: The first ONU sends the data frame to the OLT via a second-type time-frequency resource.

The first-type time-frequency resource is used by an online ONU in the passive optical network managed by the OLT to send east-west traffic data to the OLT. The second-type time-frequency resource is used by an online ONU in the passive optical network managed by the OLT to send north-south traffic data to the OLT. Both a time domain position and a frequency band corresponding to the first-type time-frequency resource are different from a time domain position and a frequency band corresponding to the second-type time-frequency resource.

Both the first-type time-frequency resource and the second-type time-frequency resource may be determined with reference to reference factors for determining various types of frequency domain resources by the first ONU in the foregoing implementation 1 and reference factors for determining various time domain resources by the first ONU in the foregoing implementation 2. Details are not described herein again.

It should be noted that the foregoing enumerates three possible implementations in which the first ONU sends the data frame to the OLT. In actual application, another possible implementation is still applicable to this application. The foregoing examples do not constitute a limitation on this application.

It should be noted that the first-type time-frequency resource and the second-type time-frequency resource may be understood as a network slice separately, so that the east-west traffic data and the north-south traffic data are separated by using a slicing mechanism at a physical layer. The two types of data are isolated at the physical layer, the ONU, and the OLT for processing, and this helps improve data processing security of the passive optical network.

304: The OLT determines the traffic type corresponding to the service data carried in the data frame, where the traffic type includes the east-west traffic or the north-south traffic.

Specifically, after the OLT receives the data frame from the first ONU, the OLT may determine the traffic type corresponding to the service data carried in the data frame.

Optionally, the OLT determines, based on a time domain resource and/or a frequency domain resource used by the OLT to receive the data frame, the traffic type corresponding to the service data.

Several possible implementations of determining, by the OLT, the traffic type corresponding to the service data carried in the data frame are described below.

Implementation 1: If the frequency domain resource used by the OLT to receive the data frame is the second-type frequency domain resource, the OLT determines that the traffic type is the east-west traffic. If the frequency domain resource used by the OLT to receive the data frame is the third-type frequency domain resource, the OLT determines that the traffic type is the north-south traffic.

For the second-type frequency domain resource and the third-type frequency domain resource, refer to the foregoing related descriptions. Details are not described herein again.

If the traffic type is the east-west traffic, the first ONU sends the data frame to the OLT via the second-type frequency domain resource. Correspondingly, the OLT may receive the data frame on the second-type frequency domain resource. Therefore, the OLT may determine that the traffic type is the east-west traffic. For example, as shown in FIG. 4, if the OLT receives the data frame in the frequency band between the frequency f1 and the frequency f2, the OLT may determine that the traffic type is the east-west traffic.

If the traffic type is the north-south traffic, the first ONU sends the data frame to the OLT via the third-type frequency domain resource. Correspondingly, the OLT may receive the data frame on the third-type frequency domain resource. Therefore, the OLT may determine that the traffic type is the north-south traffic. For example, as shown in FIG. 4, if the OLT receives the data frame in the frequency band between the frequency f2 and the frequency f3, the OLT may determine that the traffic type is the north-south traffic.

Implementation 2: If the time domain resource used by the OLT to receive the data frame is the second-type time domain resource, the OLT determines that the traffic type is the east-west traffic. If the time domain resource used by the OLT to receive the data frame is the third-type time domain resource, the OLT determines that the traffic type is the north-south traffic.

For the second-type time domain resource and the third-type time domain resource, refer to the foregoing related descriptions. Details are not described herein again.

If the traffic type is the east-west traffic, the first ONU sends the data frame to the OLT via the second-type time domain resource. Correspondingly, the OLT may receive the data frame on the second-type time domain resource. Therefore, the OLT may determine that the traffic type is the east-west traffic. For example, as shown in FIG. 5, when the first ONU is the ONU 1, the second-type time domain resource may be the time period between t1 and t2. If the OLT receives the data frame in the time period, the OLT may determine that the traffic type is the east-west traffic.

If the traffic type is the north-south traffic, the first ONU sends the data frame to the OLT via the third-type time domain resource. Correspondingly, the OLT may receive the data frame on the third-type time domain resource. Therefore, the OLT may determine that the traffic type is the north-south traffic. For example, as shown in FIG. 5, when the first ONU is the ONU 1, the third-type time domain resource may be the time period between t2 and t3. If the OLT receives the data frame in the time period, the OLT may determine that the traffic type is the north-south traffic.

Implementation 3: If a time-frequency resource used by the OLT to receive the data frame is the first-type time-frequency resource, the OLT determines that the traffic type is the east-west traffic. If the time-frequency resource used by the OLT to receive the data frame is the second-type time-frequency resource, the OLT determines that the traffic type is the north-south traffic.

For the first-type time-frequency resource and the second-type time-frequency resource, refer to the foregoing related descriptions. Details are not described herein again.

If the traffic type is the east-west traffic, the first ONU sends the data frame to the OLT via the first-type time-frequency resource. Correspondingly, the OLT may receive the data frame on the first-type time-frequency resource. Therefore, the OLT may determine that the traffic type is the east-west traffic. If the traffic type is the north-south traffic, the first ONU sends the data frame to the OLT via the second-type time-frequency resource. Correspondingly, the OLT may receive the data frame on the second-type time-frequency resource. Therefore, the OLT may determine that the traffic type is the north-south traffic.

305: The OLT performs a corresponding operation on the data frame in a processing manner corresponding to the traffic type, where a processing manner corresponding to the east-west traffic is different from a processing manner corresponding to the north-south traffic.

A possible implementation of step 305 is described below. Another implementation is still applicable to this application, and the following implementation does not constitute a limitation on this application.

Optionally, step 305 specifically includes:
If the traffic type is the east-west traffic, the OLT sends the data frame to a second ONU. If the traffic type is the north-south traffic, the OLT parses the data frame to obtain the service data. The OLT sends the service data through a northbound interface of the OLT, or the OLT encapsulates the service data in a first encapsulation format, and sends encapsulated service data through a northbound interface of the OLT.

The second ONU is a device corresponding to the service data. In other words, the second ONU is a destination of the service data. Both the first ONU and the second ONU are included in the passive optical network managed by the OLT. In other words, both the first ONU and the second ONU are online ONUs in the passive optical network managed by the OLT.

If the traffic type is the east-west traffic, the OLT may directly send the data frame to the second ONU, in other words, the OLT directly broadcasts the data frame, and does not need to parse the data frame and extract the service data. To be specific, the processing manner corresponding to the east-west traffic includes: The OLT directly sends the data frame to the second ONU, without performing a deframing operation on the data frame.

If the traffic type is the north-south traffic, the OLT performs a deframing operation on the data frame to obtain the service data. Then, the OLT sends the service data through the northbound interface. Alternatively, the OLT encapsulates the service data in the first encapsulation format, and sends the encapsulated service data through the northbound interface. To be specific, the processing manner corresponding to the north-south traffic includes: The OLT performs a deframing operation on the data frame to obtain the service data. Then, the OLT sends the service data through the northbound interface, or the OLT encapsulates the service data in a first encapsulation format, and sends encapsulated service data through the northbound interface. For example, as shown in FIG. 1, if another network connected to the passive optical network managed by the OLT is an Ethernet or an IP network, the OLT may send, to the another network through the northbound interface, the service data (for example, an Ethernet packet or an IP packet) obtained by parsing the data frame. If the another network connected to the passive optical network managed by the OLT is another passive optical network, the OLT may encapsulate the service data into a PON burst frame, and send the PON burst frame to the another passive optical network.

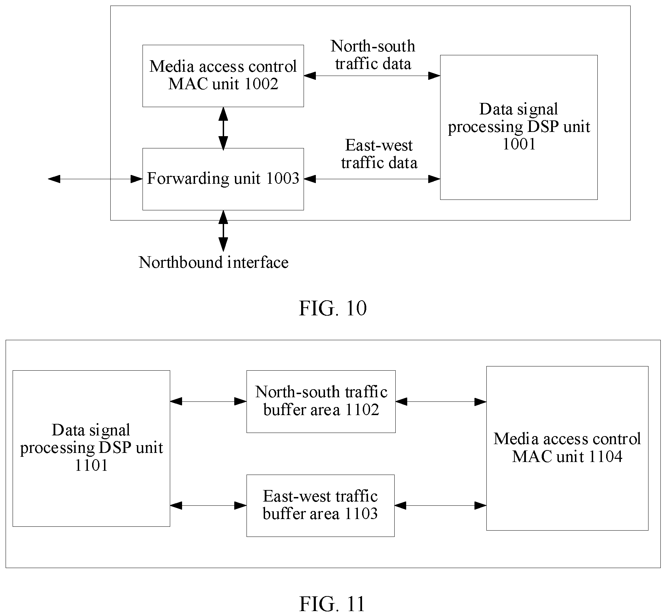

FIG. 10 is a diagram of a structure of an OLT according to an embodiment of this application. Refer to FIG. 10. The OLT includes a digital signal processing (digital signal processing, DSP) unit 1001, a MAC unit 1002, and a forwarding unit 1003. The forwarding unit 1003 receives a data frame, and sends the data frame to the DSP unit 1001. The DSP unit 1001 determines a frequency domain resource used by the forwarding unit 1003 to receive the data frame. If the frequency domain resource used by the forwarding unit 1003 to receive the data frame is a second-type frequency domain resource, the DSP unit 1001 may directly forward the data frame to a second ONU via the forwarding unit 1003.

In other words, the DSP unit 1001 completes forwarding of the data frame, and does not need to perform a deframing operation and then perform a framing operation via the MAC unit 1002. If the frequency domain resource used by the forwarding unit 1003 to receive the data frame is a third-type frequency domain resource, the DSP unit 1001 sends the data frame to the MAC unit 1002. The MAC unit 1002 performs PON deframing on the data frame to obtain service data (for example, an Ethernet packet or an IP packet), and sends the service data through a northbound interface.

If a time domain resource used by the forwarding unit 1003 to receive the data frame is a second-type time domain resource, the DSP unit 1001 may directly forward the data frame to a second ONU via the forwarding unit 1003. In other words, the DSP unit 1001 completes forwarding of the data frame, and does not need to perform a deframing operation and then perform a framing operation via the MAC unit 1002. If the time domain resource used by the forwarding unit 1003 to receive the data frame is a third-type time domain resource, the DSP unit 1001 sends the data frame to the MAC unit 1002. The MAC unit 1002 performs PON deframing on the data frame to obtain service data (for example, an Ethernet packet or an IP packet), and sends the service data through a northbound interface.

Optionally, that the OLT sends the data frame to a second ONU includes: The OLT sends the data frame to the second ONU in a downlink data sending manner corresponding to the east-west traffic.

Specifically, the OLT sends the data frame to the second ONU via a first-type time domain resource and/or a first-type frequency domain resource.

The first-type frequency domain resource is used by the OLT to send east-west traffic data to an online ONU in the passive optical network managed by the OLT. For example, as shown in FIG. 4, a frequency band corresponding to the first-type frequency domain resource may be a frequency band between f4 and f5. As shown in FIG. 10, the DSP unit 1001 may modulate the data frame to the first-type frequency domain resource, and send the data frame to the forwarding unit 1003. The forwarding unit 1003 sends the data frame to the second ONU via the first-type frequency domain resource. Correspondingly, FIG. 11 is a diagram of a structure of a second ONU according to an embodiment of this application. As shown in FIG. 11, if a frequency domain resource used by the second ONU to receive the data frame is the first-type frequency domain resource, the DSP unit 1101 may determine that the traffic type of the service data carried in the data frame is the east-west traffic. The second ONU may directly store the data frame in an east-west traffic buffer area 1103.

The first-type time domain resource is used by the OLT to send east-west traffic data to an online ONU in the passive optical network managed by the OLT. For example, as shown in FIG. 5, the first ONU is the ONU 1, and a time domain position corresponding to the first-type time domain resource is a time period between t1 and t2. As shown in FIG. 10, the forwarding unit 1003 may send the data frame to the second ONU on the first-type time domain resource. Correspondingly, as shown in FIG. 11, if a time domain resource used by the second ONU to receive the data frame is the first-type time domain resource, the DSP unit 1101 may determine that the traffic type of the service data carried in the data frame is the east-west traffic, and the second ONU may directly store the data frame in the east-west traffic buffer area 1103.

Optionally, the MAC unit 1104 in the second ONU may read data from a north-south traffic buffer area 1102 or the east-west traffic buffer area 1103, and perform a deframing operation on the data, to obtain the service data.

It should be noted that the structure shown in FIG. 11 is merely an example. In actual application, the second ONU may first perform a deframing operation on the data to obtain the service data, and then store the service data in a corresponding buffer area. This is not specifically limited in this application.

It should be noted that, for north-south traffic data received by the OLT through the northbound interface, the OLT may first determine a destination address of the north-south traffic data. Then, the OLT adds a GEM frame header to the north-south traffic data, encapsulates the north-south traffic data into a downlink GTC frame, and broadcasts the downlink GTC frame via a fourth-type time domain resource and/or a fourth-type frequency domain resource. The ONU may determine, based on the fourth-type time domain resource or the fourth-type frequency domain resource, that the service data carried in the data frame is the north-south traffic data. Therefore, the ONU may store the data frame in the north-south traffic buffer area.

It can be learned that, for a data frame that is sent by each online ONU in the passive optical network and that carries east-west traffic data, the OLT does not need to perform deframing on the data frame, but may directly perform transparent transmission in the DSP unit. In this way, a process of deframing from a data frame (a PON frame) to service data (a service packet) and a process of framing from service data (a service packet) to a data frame (a PON frame) are avoided. In addition, a queue buffer process of a service packet in two-level buffer queues, namely, an input buffer queue and an output buffer queue, of the forwarding unit of the OLT is also avoided, and a communication delay is greatly reduced. Therefore, in the technical solutions of this application, the deframing process, the framing process, and the queue buffer process in the forwarding unit can be avoided, so that burden and energy consumption overheads of the OLT are effectively reduced, to improve efficiency of communication between the ONUs in the PON, and reduce a communication delay.

In this embodiment of this application, the OLT receives the data frame from the first ONU, and the data frame carries the service data. Then, the OLT determines the traffic type corresponding to the service data, where the traffic type includes the east-west traffic or the north-south traffic. The OLT performs the corresponding operation on the data frame in the processing manner corresponding to the traffic type, where the processing manner corresponding to the east-west traffic is different from the processing manner corresponding to the north-south traffic. It can be learned that, in the technical solutions of this application, the OLT distinguishes, in a data frame processing process, the traffic type of the service data carried in the data frame, and performs the corresponding operation on the data frame in the processing manner corresponding to the traffic type. In this way, different processing operations are performed on data of different traffic types, to help improve communication transmission performance, data processing performance, security performance, and the like of the passive optical network.

It should be noted that, in the technical solutions of this application, the first ONU may alternatively generate a data subframe 1 and a data subframe 2, where the data subframe 1 carries service data of east-west traffic, and the data subframe 2 carries service data of north-south traffic. The first ONU encapsulates the data subframe 1 and the data subframe 2 into one data frame. In this implementation, the data frame includes the data subframe 1 and the data subframe 2. In this case, a traffic type corresponding to the service data carried in the data frame includes the east-west traffic and the north-south traffic. Then, the first ONU sends the data frame to the OLT. The first ONU may send the data subframe 1 by using a second-type frequency domain resource and/or a second-type time domain resource, and send the data subframe 2 via a third-type frequency domain resource and/or a third-type time domain resource. After the OLT receives the data frame, the OLT may first parse the data frame to obtain the data subframe 1 and the data subframe 2. Then, the OLT determines, with reference to a time domain resource and/or a frequency domain resource respectively used by the OLT to receive the data subframe 1 and the data subframe 2, that the traffic type corresponding to the service data carried in the data subframe 1 is the east-west traffic, and the traffic type corresponding to the service data carried in the data frame 2 is the north-south traffic. The OLT may not parse the data subframe 1, and directly send the data subframe 1 to the second ONU. The OLT parses the data subframe 2 to obtain the corresponding service data, and sends the service data through the northbound interface.

Two possible implementations of determining the first allocation ratio by the OLT are described below with reference to embodiments shown in FIG. 6 and FIG. 7.

FIG. 6 is a diagram of another embodiment of a data processing method according to an embodiment of this application. Refer to FIG. 6. The method includes the following steps.

601: A first ONU sends a first request to an OLT, and correspondingly, the OLT receives the first request from the first ONU, where the first request is for requesting a frequency domain resource used by the first ONU to send east-west traffic data to the OLT.

Specifically, the first ONU may determine an uplink buffer duty cycle of the east-west traffic data. The first ONU generates the first request based on the uplink buffer duty cycle of the east-west traffic data, and sends the first request to the OLT.

602: The first ONU sends a second request to the OLT, and correspondingly, the OLT receives the second request from the first ONU, where the second request is for requesting a frequency domain resource used by the first ONU to send north-south traffic data to the OLT.

Specifically, the first ONU may determine an uplink buffer duty cycle of the north-south traffic data. The first ONU generates the second request based on the uplink buffer duty cycle of the north-south traffic data, and sends the second request to the OLT.

603: The OLT determines a first allocation ratio based on the first request and the second request, where the first allocation ratio indicates a ratio of a second-type frequency domain resource of the first ONU to a third-type frequency domain resource of the first ONU.

Optionally, the OLT determines the first allocation ratio based on a maximum ratio that is of the east-west traffic to the north-south traffic and that is specified by an operator, the first request, and the second request. For example, the maximum ratio that is of the east-west traffic to the north-south traffic and that is specified by the operator cannot exceed 1/2, and in this case, the first allocation ratio determined by the OLT based on the first request and the second request cannot exceed 1/2.

It should be noted that, optionally, the first request is carried in field extension of an uplink PON frame, OMCI message extension, or PLOAM message extension, and the second request is carried in a DRB field of the uplink PON frame.

It can be learned from the embodiment shown in FIG. 6 that the OLT may determine the first allocation ratio for the first ONU based on the first request and the second request, to configure an allocation ratio of the second-type frequency domain resource to the third-type frequency domain resource at an ONU level. This helps configure an appropriate allocation ratio for each ONU, to implement appropriate resource utilization.

FIG. 7 is a diagram of another embodiment of a data processing method according to an embodiment of this application. Refer to FIG. 7. The method includes the following steps.

701: Each online ONU in a passive optical network managed by an OLT sends a third request to the OLT, and correspondingly, the OLT receives the third request from each online ONU, where a third request corresponding to an online ONU is for requesting a frequency domain resource used by the online ONU to send east-west traffic data to the OLT.

The third request is similar to the first request in the embodiment shown in FIG. 6. For details, refer to the foregoing related descriptions.

702: Each online ONU in the passive optical network managed by the OLT sends a fourth request to the OLT, and correspondingly, the OLT receives the fourth request from each online ONU, where a fourth request corresponding to an online ONU is for requesting a frequency domain resource used by the online ONU to send north-south traffic data to the OLT.

The fourth request is similar to the second request in the embodiment shown in FIG. 6. For details, refer to the foregoing related descriptions.

703: The OLT determines a first allocation ratio based on the third request and the fourth request, where the first allocation ratio is a ratio of a second-type frequency domain resource of each online ONU to a third-type frequency domain resource of each online ONU.

Optionally, the OLT determines the first allocation ratio based on a maximum ratio that is of east-west traffic to north-south traffic and that is specified by an operator, and the third request and the fourth request of each online ONU. For example, the maximum ratio that is of the east-west traffic to the north-south traffic and that is specified by the operator cannot exceed 1/2, and in this case, the first allocation ratio determined by the OLT based on the third request and the fourth request cannot exceed 1/2.

It should be noted that, optionally, the third request is carried in field extension of an uplink PON frame, OMCI message extension, or PLOAM message extension, and the fourth request is carried in a DRB field of the uplink PON frame.

In this implementation, the OLT comprehensively determines the first allocation ratio based on the third request and the fourth request that are reported by each online ONU in the passive optical network. In other words, all online ONUs in the passive optical network use a same allocation ratio. In this way, a determining process of the OLT is simplified, and efficiency is improved.

Two possible implementations of determining the second allocation ratio by the OLT are described below with reference to embodiments shown in FIG. 8 and FIG. 9.

FIG. 8 is a diagram of another embodiment of a data processing method according to an embodiment of this application. Refer to FIG. 8. The method includes the following steps.

801: A first ONU sends a fifth request to an OLT, and correspondingly, the OLT receives the fifth request from the first ONU, where the fifth request is for requesting a time domain resource used by the first ONU to send east-west traffic data to the OLT.

802: The first ONU sends a sixth request to the OLT, and correspondingly, the OLT receives the sixth request from the first ONU, where the sixth request is for requesting a time domain resource used by the first ONU to send north-south traffic data to the OLT.

803: The OLT determines a second allocation ratio based on the fifth request and the sixth request, where the second allocation ratio indicates a ratio of a second-type time domain resource of the first ONU to a third-type time domain resource of the first ONU.

Optionally, the OLT determines the second allocation ratio based on a maximum ratio that is of east-west traffic to north-south traffic and that is specified by an operator, the fifth request, and the sixth request. For example, the maximum ratio that is of the east-west traffic to the north-south traffic and that is specified by the operator cannot exceed 1/3, and in this case, the second allocation ratio determined by the OLT based on the fifth request and the sixth request cannot exceed 1/3.

It should be noted that, optionally, the fifth request is carried in field extension of an uplink PON frame, OMCI message extension, or PLOAM message extension, and the sixth request is carried in a DRB field of the uplink PON frame.

It can be learned from the embodiment shown in FIG. 8 that the OLT may determine the second allocation ratio for the first ONU based on the fifth request and the sixth request, to configure an allocation ratio of the second-type time domain resource to the third-type time domain resource at an ONU level. This helps configure an appropriate allocation ratio for each ONU, to implement appropriate resource utilization.

FIG. 9 is a diagram of another embodiment of a data processing method according to an embodiment of this application. Refer to FIG. 9. The method includes the following steps.

901: Each online ONU in a passive optical network managed by an OLT sends a seventh request to the OLT, and correspondingly, the OLT receives the seventh request from each online ONU, where a seventh request corresponding to an online ONU is for requesting a time domain resource used by the online ONU to send east-west traffic data to the OLT.

The seventh request is similar to the fifth request in the embodiment shown in FIG. 8. For details, refer to the foregoing related descriptions.

902: Each online ONU in the passive optical network managed by the OLT sends an eighth request to the OLT, and correspondingly, the OLT receives the eighth request from each online ONU, where an eighth request corresponding to an online ONU is for requesting a time domain resource used by the online ONU to send north-south traffic data to the OLT.

The eighth request is similar to the sixth request in the embodiment shown in FIG. 8. For details, refer to the foregoing related descriptions.

903: The OLT determines a second allocation ratio based on the seventh request and the eighth request, where the second allocation ratio is a ratio of a second-type time domain resource of each online ONU to a third-type time domain resource of each online ONU.

Optionally, the OLT determines the second allocation ratio based on a maximum ratio that is of east-west traffic to north-south traffic and that is specified by an operator, the seventh request, and the eighth request. For example, the maximum ratio that is of the east-west traffic to the north-south traffic and that is specified by the operator cannot exceed 1/3, and in this case, the second allocation ratio determined by the OLT based on the seventh request and the eighth request cannot exceed 1/3.

It should be noted that, optionally, the seventh request is carried in field extension of an uplink PON frame, OMCI message extension, or PLOAM message extension, and the eighth request is carried in a DRB field of the uplink PON frame.

In this implementation, the OLT comprehensively determines the second allocation ratio based on the seventh request and the eighth request that are reported by each online ONU in the passive optical network. In other words, all online ONUs in the passive optical network use a same allocation ratio. In this way, a determining process of the OLT is simplified, and efficiency is improved.

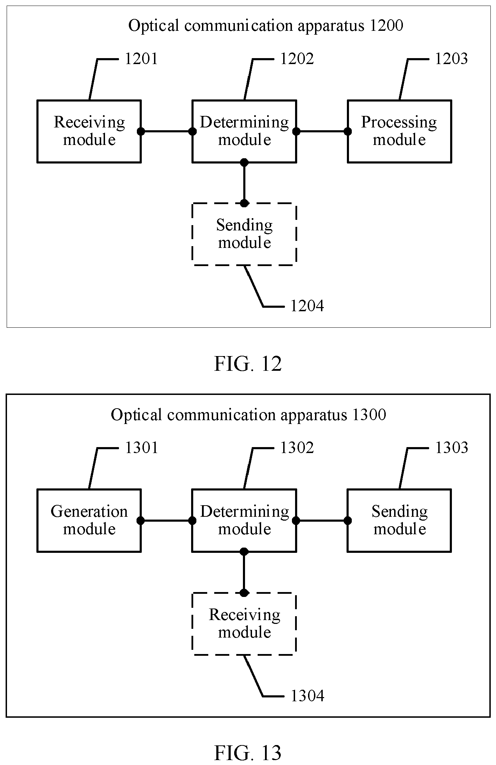

The data processing method in embodiments of this application is described above. An optical communication apparatus in an embodiment of this application is described below. Refer to FIG. 12. An optical communication apparatus 1200 includes a receiving module 1201, a determining module 1202, and a processing module 1203. Optionally, the optical communication apparatus 1200 further includes a sending module 1204.

The receiving module 1201 is configured to perform step 303 in the embodiment shown in FIG. 3. The determining module 1202 is configured to perform step 304 in the embodiment shown in FIG. 3. The processing module 1203 is configured to perform step 305 in the embodiment shown in FIG. 3.

In a possible implementation, the processing module 1203 is specifically configured to: if a traffic type is east-west traffic, send a data frame to a second ONU, where the second ONU is a device corresponding to a destination address of service data, and both the first ONU and the second ONU are included in a passive optical network managed by the optical communication apparatus 1200; or if the traffic type is north-south traffic, parse the data frame to obtain the service data, send the service data through a northbound interface of the optical communication apparatus 1200, encapsulate the service data in a first encapsulation format, and send encapsulated service data through the northbound interface of the optical communication apparatus 1200.

In another possible implementation, the processing module 1203 is specifically configured to: send the data frame to the second ONU in a downlink data sending manner corresponding to the east-west traffic.

In another possible implementation, the processing module 1203 is specifically configured to: send the data frame to the second ONU via a first-type time domain resource and/or a first-type frequency domain resource, where the first-type time domain resource is used by the optical communication apparatus 1200 to send east-west traffic data to an online ONU in the passive optical network in which the optical communication apparatus 1200 is located, and the first-type frequency domain resource is used by the optical communication apparatus 1200 to send east-west traffic data to an online ONU in the passive optical network in which the optical communication apparatus 1200 is located.

In another possible implementation, the determining module 1202 is specifically configured to: determine the traffic type based on a time domain resource and/or a frequency domain resource used by the optical communication apparatus 1200 to receive the data frame.

In another possible implementation, the determining module 1202 is specifically configured to: if the frequency domain resource used by the optical communication apparatus 1200 to receive the data frame is a second-type frequency domain resource, determine that the traffic type is the east-west traffic, where the second-type frequency domain resource is a frequency domain resource used by an online ONU in the passive optical network managed by the optical communication apparatus 1200 to send east-west traffic data to the optical communication apparatus 1200; or if the frequency domain resource used by the optical communication apparatus 1200 to receive the data frame is a third-type frequency domain resource, determine that the traffic type is the north-south traffic, where the third-type frequency domain resource is used by an online ONU in the passive optical network managed by the optical communication apparatus 1200 to send north-south traffic data to the optical communication apparatus 1200.

In another possible implementation, the determining module 1202 is further configured to perform step 303a in the embodiment shown in FIG. 3. The sending module 1204 is configured to perform step 302b in the embodiment shown in FIG. 3.

In another possible implementation, first information is carried in GTC field extension, OMCI message extension, or PLOAM message extension.

In another possible implementation, the receiving module 1201 is further configured to perform step 601 and step 602 in the embodiment shown in FIG. 6. The determining module 1202 is specifically configured to perform step 603 in the embodiment shown in FIG. 6.

In another possible implementation, a first request is carried in field extension of an uplink PON frame, OMCI message extension, or PLOAM message extension, and a second request is carried in a DRB field of the uplink PON frame.

In another possible implementation, the receiving module 1201 is further configured to perform step 701 and step 702 in the embodiment shown in FIG. 7. The determining module 1202 is specifically configured to perform step 703 in the embodiment shown in FIG. 7.

In another possible implementation, the determining module 1202 is specifically configured to: if the time domain resource used by the optical communication apparatus 1200 to receive the data frame is a second-type time domain resource, determine that the traffic type is the east-west traffic, where the second-type time domain resource is a time domain resource used by an online ONU in the passive optical network managed by the optical communication apparatus 1200 to send east-west traffic data to the optical communication apparatus 1200; or if the time domain resource used by the optical communication apparatus 1200 to receive the data frame is a third-type time domain resource, determine that the traffic type is the north-south traffic, where the third-type time domain resource is a time domain resource used by an online ONU in the passive optical network managed by the optical communication apparatus 1200 to send north-south traffic data to the optical communication apparatus 1200.

In another possible implementation, the determining module 1202 is further configured to perform step 303c in the embodiment shown in FIG. 3. The sending module 1204 is configured to perform step 303d in the embodiment shown in FIG. 3.

In another possible implementation, the receiving module 1201 is further configured to perform step 801 and step 802 in the embodiment shown in FIG. 8. The determining module 1202 is specifically configured to perform step 803 in the embodiment shown in FIG. 8.

In another possible implementation, a fifth request is carried in field extension of an uplink PON frame, OMCI message extension, or PLOAM message extension, and a sixth request is carried in a DRB field of the uplink PON frame.

In another possible implementation, the receiving module 1201 is further configured to perform step 901 and step 902 in the embodiment shown in FIG. 9. The determining module 1202 is specifically configured to perform step 903 in the embodiment shown in FIG. 9.

In another possible implementation, the determining module 1202 is further configured to perform step 302a in the embodiment shown in FIG. 3. The sending module 1204 is configured to perform step 302b in the embodiment shown in FIG. 3.

In another possible implementation, third information is carried in downlink GTC field extension, OMCI message extension, or PLOAM message extension.

An embodiment of this application further provides another optical communication apparatus. Refer to FIG. 13. The optical communication apparatus 1300 includes a generation module 1301, a determining module 1302, and a sending module 1303. Optionally, the optical communication apparatus 1300 further includes a receiving module 1304.

The generation module 1301 is configured to perform step 301 in the embodiment shown in FIG. 3. The determining module 1302 is configured to perform step 302 in the embodiment shown in FIG. 3. The sending module 1303 is configured to perform step 303 in the embodiment shown in FIG. 3.

In a possible implementation, if a traffic type is east-west traffic, the sending module 1303 is specifically configured to: send a data frame to an OLT via a second-type frequency domain resource, where the second-type frequency domain resource is used by an online ONU in a passive optical network managed by the OLT to send east-west traffic data to the OLT. Alternatively, if the traffic type is north-south traffic, the sending module 1303 is specifically configured to: send the data frame to the OLT via a third-type frequency domain resource, where the third-type frequency domain resource is a frequency domain resource used by an online ONU in the passive optical network managed by the OLT to send north-south traffic data to the OLT.

In another possible implementation, the receiving module 1304 is configured to perform step 302b in the embodiment shown in FIG. 3. The determining module 1302 is further configured to determine the second-type frequency domain resource of the optical communication apparatus 1300 and the third-type frequency domain resource of the optical communication apparatus 1300 based on a first allocation ratio.

In another possible implementation, the sending module 1303 is further configured to perform step 601 and step 602 in the embodiment shown in FIG. 6.

In another possible implementation, the sending module 1303 is specifically configured to: if the traffic type is east-west traffic, send the data frame to the OLT via a second-type time domain resource, where the second-type time domain resource is a time domain resource used by an online ONU in a passive optical network managed by the OLT to send east-west traffic data to the OLT. Alternatively, if the traffic type is north-south traffic, the sending module 1303 is specifically configured to send the data frame to the OLT via a third-type time domain resource, where the third-type time domain resource is used by an online ONU in a passive optical network managed by the OLT to send north-south traffic data to the OLT.

In another possible implementation, the receiving module 1304 is configured to perform step 303d in the embodiment shown in FIG. 3. The determining module 1302 is further configured to determine the second-type time domain resource of the optical communication apparatus 1300 and the third-type time domain resource of the optical communication apparatus 1300 based on a second allocation ratio.

In another possible implementation, the determining module 1302 is specifically configured to determine whether a device corresponding to the service data is an online ONU in the passive optical network managed by the OLT; and if the device corresponding to the service data is the online ONU in the passive optical network managed by the OLT, determine that the traffic type is the east-west traffic; or if the device corresponding to the service data is not the online ONU in the passive optical network managed by the OLT, determine that the traffic type is the north-south traffic.

In another possible implementation, the receiving module 1304 is configured to perform step 302b in the embodiment shown in FIG. 3.

In another possible implementation, first information is carried in downlink GTC field extension, OMCI message extension, or PLOAM message extension.

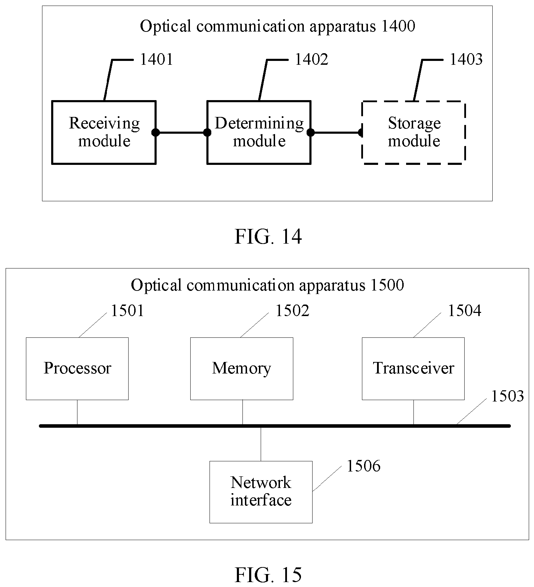

An embodiment of this application further provides another optical communication apparatus. Refer to FIG. 14. The optical communication apparatus 1400 includes a receiving module 1401 and a determining module 1402. Optionally, the optical communication apparatus 1400 further includes a storage module 1403.

The receiving module 1401 is configured to receive a data frame from an OLT, where the data frame carries service data. The determining module 1402 is configured to determine, based on a time domain resource and/or a frequency domain resource used by the optical communication apparatus 1400 to receive the data frame, a traffic type corresponding to the service data, where the traffic type includes east-west traffic or north-south traffic.

In a possible implementation, the determining module 1402 is specifically configured to: if the time domain resource used by the optical communication apparatus 1400 to receive the data frame is a first-type time domain resource, determine that the traffic type is the east-west traffic; or if the time domain resource used by the optical communication apparatus 1400 to receive the data frame is a fourth-type time domain resource, determine that the traffic type is the north-south traffic. The first-type time domain resource is used by the OLT to send east-west traffic data to an online ONU in a passive optical network managed by the OLT. A first-type frequency domain resource is used by the OLT to send east-west traffic data to an online ONU in the passive optical network managed by the OLT.

In another possible implementation, the determining module 1402 is specifically configured to: if the frequency domain resource used by the optical communication apparatus 1400 to receive the data frame is a first-type frequency domain resource, determine that the traffic type is the east-west traffic; or if the frequency domain resource used by the optical communication apparatus 1400 to receive the data frame is a fourth-type frequency domain resource, determine that the traffic type is the north-south traffic.

In another possible implementation, the storage module 1403 is configured to: if the traffic type is the east-west traffic, store the service data in an east-west traffic buffer area; or if the traffic type is the north-south traffic, store the service data in a north-south traffic buffer area.

This application further provides another optical communication apparatus. For example, FIG. 15 is a diagram of another structure of an optical communication apparatus according to an embodiment of this application. The optical communication apparatus 1500 may be the OLT in the foregoing method embodiments. Alternatively, the optical communication apparatus 1500 may be the first ONU or the second ONU in the foregoing method embodiments.

Specifically, the optical communication apparatus 1500 shown in this embodiment includes a processor 1501, a memory 1502, a bus 1503, a transceiver 1504, and a network interface 1506.

Specifically, the memory 1502 may include a computer storage medium in a form of a volatile memory and/or a non-volatile memory, for example, a read-only memory and/or a random access memory. The memory 1502 may store an operating system, an application, another program module, executable code, and program data.

The transceiver 1504 may be configured to input a command and information to the optical communication apparatus 1500. The transceiver 1504 may be connected to the processor 1501 through the bus 1503. The transceiver 1504 may be further configured to output information from or input information to the optical communication apparatus 1500.

The optical communication apparatus 1500 may be connected to a communication network via the network interface 1506. In a networking environment, computer-executable instructions stored in the optical communication apparatus 1500 may be stored in a remote storage device but is not limited to local storage.

When the processor 1501 in the optical communication apparatus 1500 executes the executable code or the application stored in the memory 1502, the optical communication apparatus 1500 may perform a method operation on any side of the foregoing method embodiments. For a specific performing process, refer to the foregoing method embodiments. Details are not described herein again.

An embodiment of this application further provides an optical communication system. The optical communication system includes an OLT and a first ONU. Optionally, the optical communication system further includes a second ONU. The OLT is configured to perform all or some of the steps performed by the OLT in embodiments shown in FIG. 3 and FIG. 6 to FIG. 9. The first ONU is configured to perform all or some of the steps performed by the first ONU in embodiments shown in FIG. 3 and FIG. 6 to FIG. 9. The second ONU is configured to perform all or some of the steps performed by the first ONU in the embodiment shown in FIG. 3.

An embodiment of this application further provides a computer program product including instructions. When the computer program product runs on a computer, the computer is enabled to perform the method in embodiments shown in FIG. 3 and FIG. 6 to FIG. 9.

An embodiment of this application further provides a computer-readable storage medium, including computer instructions. When the computer instructions are run on a computer, the computer is enabled to perform the method in embodiments shown in FIG. 3 and FIG. 6 to FIG. 9.

An embodiment of this application further provides a chip apparatus, including a processor. The processor is configured to be connected to a memory, and call a program stored in the memory, to enable the processor to perform the method in embodiments shown in FIG. 3 and FIG. 6 to FIG. 9.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the method in embodiments shown in FIG. 3 and FIG. 6 to FIG. 9. The memory mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to conventional technologies, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments, or equivalent replacements may still be made to some technical features thereof, and such modifications or replacements do not cause the essence of the corresponding technical solutions to depart from the spirit and scope of technical solutions of embodiments of this application.

## Claims

1. A data processing method, wherein the method comprises:
receiving, by an optical line terminal OLT, a data frame from a first optical network unit ONU, wherein the data frame carries service data;
determining, by the OLT, a traffic type corresponding to the service data, wherein the traffic type comprises east-west traffic or north-south traffic; and
performing, by the OLT, a corresponding operation on the data frame in a processing manner corresponding to the traffic type, wherein a processing manner corresponding to the east-west traffic is different from a processing manner corresponding to the north-south traffic.

2. The method according to claim 1, wherein the performing, by the OLT, a corresponding operation on the data frame in a processing manner corresponding to the traffic type comprises:
if the traffic type is the east-west traffic, sending, by the OLT, the data frame to a second ONU, wherein the second ONU is a device corresponding to the service data, and both the first ONU and the second ONU are comprised in a passive optical network managed by the OLT; or
if the traffic type is the north-south traffic, parsing, by the OLT, the data frame to obtain the service data, and sending, by the OLT, the service data through a northbound interface of the OLT, or encapsulating, by the OLT, the service data in a first encapsulation format, and sending encapsulated service data through a northbound interface of the OLT.

3. The method according to claim 2, wherein the sending, by the OLT, the data frame to a second ONU comprises:
sending, by the OLT, the data frame to the second ONU via a first-type time domain resource and/or a first-type frequency domain resource, wherein the first-type time domain resource is used by the OLT to send east-west traffic data to an online ONU in the passive optical network, and the first-type frequency domain resource is used by the OLT to send east-west traffic data to an online ONU in the passive optical network.

4. The method according to any one of claims 1 to 3, wherein the determining, by the OLT, a traffic type corresponding to the service data comprises:
determining, by the OLT, the traffic type based on a time domain resource and/or a frequency domain resource used by the OLT to receive the data frame.

5. The method according to claim 4, wherein the determining, by the OLT, the traffic type based on a frequency domain resource used by the OLT to receive the data frame comprises:
if the frequency domain resource used by the OLT to receive the data frame is a second-type frequency domain resource, determining, by the OLT, that the traffic type is the east-west traffic, wherein the second-type frequency domain resource is used by an online ONU in the passive optical network managed by the OLT to send east-west traffic data to the OLT; or
if the frequency domain resource used by the OLT to receive the data frame is a third-type frequency domain resource, determining, by the OLT, that the traffic type is the north-south traffic, wherein the third-type frequency domain resource is used by an online ONU in the passive optical network managed by the OLT to send north-south traffic data to the OLT.

6. The method according to claim 4 or 5, wherein before the determining, by the OLT, the traffic type based on a frequency domain resource used by the OLT to receive the data frame, the method further comprises:
determining, by the OLT, a first allocation ratio, wherein the first allocation ratio is a ratio of the second-type frequency domain resource to the third-type frequency domain resource; and
sending, by the OLT, first information to the first ONU, wherein the first information indicates the first allocation ratio.

7. The method according to claim 4, wherein the determining, by the OLT, the traffic type based on a time domain resource used by the OLT to receive the data frame comprises:
if the time domain resource used by the OLT to receive the data frame is a second-type time domain resource, determining, by the OLT, that the traffic type is the east-west traffic, wherein the second-type time domain resource is used by an online ONU in the passive optical network managed by the OLT to send east-west traffic data to the OLT; or
if the time domain resource used by the OLT to receive the data frame is a third-type time domain resource, determining, by the OLT, that the traffic type is the north-south traffic, wherein the third-type time domain resource is used by an online ONU in the passive optical network managed by the OLT to send north-south traffic data to the OLT.

8. The method according to claim 4 or 7, wherein before the determining, by the OLT, the traffic type based on a time domain resource used by the OLT to receive the data frame, the method further comprises:
determining, by the OLT, a second allocation ratio, wherein the second allocation ratio is a ratio of the second-type time domain resource to the third-type time domain resource; and
sending, by the OLT, second information to the first ONU, wherein the second information indicates the second allocation ratio.

9. A data processing method, wherein the method comprises:
generating, by a first optical network unit ONU, a data frame;
determining, by the first ONU, a traffic type corresponding to service data carried in the data frame, wherein the traffic type comprises east-west traffic or north-south traffic; and
sending, by the first ONU, the data frame to an optical line terminal OLT in an uplink data sending manner corresponding to the traffic type, wherein an uplink data sending manner corresponding to the east-west traffic is different from an uplink data sending manner corresponding to the north-south traffic.

10. The method according to claim 9, wherein if the traffic type is the east-west traffic, the sending, by the first ONU, the data frame to an optical line terminal OLT in an uplink data sending manner corresponding to the traffic type comprises: sending, by the first ONU, the data frame to the OLT via a second-type frequency domain resource, wherein the second-type frequency domain resource is used by an online ONU in a passive optical network managed by the OLT to send east-west traffic data to the OLT; or
if the traffic type is the north-south traffic, the sending, by the first ONU, the data frame to an optical line terminal OLT in an uplink data sending manner corresponding to the traffic type comprises: sending, by the first ONU, the data frame to the OLT via a third-type frequency domain resource, wherein the third-type frequency domain resource is used by an online ONU in a passive optical network managed by the OLT to send north-south traffic data to the OLT.

11. The method according to claim 10, wherein before the sending, by the first ONU, the data frame to an optical line terminal OLT in an uplink data sending manner corresponding to the traffic type, the method further comprises:
receiving, by the first ONU, first information from the OLT, wherein the first information indicates a first allocation ratio, and the first allocation ratio is a ratio of the second-type frequency domain resource to the third-type frequency domain resource; and
determining, by the first ONU, the second-type frequency domain resource of the first ONU and the third-type frequency domain resource of the first ONU based on the first allocation ratio.

12. The method according to claim 9, wherein if the traffic type is the east-west traffic, the sending, by the first ONU, the data frame to an optical line terminal OLT in an uplink data sending manner corresponding to the traffic type comprises: sending, by the first ONU, the data frame to the OLT via a second-type time domain resource, wherein the second-type time domain resource is used by an online ONU in a passive optical network managed by the OLT to send east-west traffic data to the OLT; or
if the traffic type is the north-south traffic, the sending, by the first ONU, the data frame to an optical line terminal OLT in an uplink data sending manner corresponding to the traffic type comprises: sending, by the first ONU, the data frame to the OLT via a third-type time domain resource, wherein the third-type time domain resource is used by an online ONU in a passive optical network managed by the OLT to send north-south traffic data to the OLT.

13. The method according to claim 12, wherein before the sending, by the first ONU, the data frame to an optical line terminal OLT in an uplink data sending manner corresponding to the traffic type, the method further comprises:
receiving, by the first ONU, second information from the OLT, wherein the second information indicates a second allocation ratio, and the second allocation ratio is a ratio of the second-type time domain resource to the third-type time domain resource; and
determining, by the first ONU, the second-type time domain resource of the first ONU and the third-type time domain resource of the first ONU based on the second allocation ratio.

14. The method according to any one of claims 9 to 13, wherein the determining, by the first optical network unit ONU, a traffic type corresponding to service data carried in the data frame comprises:
determining, by the first ONU, whether a device corresponding to the service data is an online ONU in the passive optical network managed by a first OLT; and
if the device corresponding to the service data is the online ONU in the passive optical network managed by the first OLT, determining, by the first ONU, that the traffic type is the east-west traffic; or
if the device corresponding to the service data is not the online ONU in the passive optical network managed by the first OLT, determining, by the first ONU, that the traffic type is the north-south traffic.

15. An optical communication apparatus, wherein the optical communication apparatus comprises:
a receiving module, configured to receive a data frame from a first optical network unit ONU, wherein the data frame carries service data;
a determining module, configured to determine a traffic type corresponding to the service data, wherein the traffic type comprises east-west traffic or north-south traffic;
a processing module, configured to perform a corresponding operation on the data frame in a processing manner corresponding to the traffic type, wherein a processing manner corresponding to the east-west traffic is different from a processing manner corresponding to the north-south traffic.

16. The optical communication apparatus according to claim 15, wherein the processing module is specifically configured to:
if the traffic type is the east-west traffic, send the data frame to a second ONU, wherein the second ONU is a device corresponding to the service data, and both the first ONU and the second ONU are comprised in a passive optical network managed by the optical communication apparatus; or
if the traffic type is the north-south traffic, parse the data frame to obtain the service data, and send the service data through a northbound interface of the optical communication apparatus, or encapsulate the service data in a first encapsulation format, and send encapsulated service data through a northbound interface of the optical communication apparatus.

17. The optical communication apparatus according to claim 16, wherein the processing module is specifically configured to:
send the data frame to the second ONU via a first-type time domain resource and/or a first-type frequency domain resource, wherein the first-type time domain resource is used by the optical communication apparatus to send east-west traffic data to an online ONU in the passive optical network, and the first-type frequency domain resource is used by the optical communication apparatus to send east-west traffic data to an online ONU in the passive optical network.

18. The optical communication apparatus according to any one of claims 15 to 17, wherein the determining module is specifically configured to:
determine the traffic type based on a time domain resource and/or a frequency domain resource used by the optical communication apparatus to receive the data frame.

19. The optical communication apparatus according to claim 18, wherein the determining module is specifically configured to:
if the frequency domain resource used by the optical communication apparatus to receive the data frame is a second-type frequency domain resource, determine that the traffic type is the east-west traffic, wherein the second-type frequency domain resource is used by an online ONU in the passive optical network managed by the optical communication apparatus to send east-west traffic data to the optical communication apparatus; or
if the frequency domain resource used by the optical communication apparatus to receive the data frame is a third-type frequency domain resource, determine that the traffic type is the north-south traffic, wherein the third-type frequency domain resource is used by an online ONU in the passive optical network managed by the optical communication apparatus to send north-south traffic data to the optical communication apparatus.

20. The optical communication apparatus according to claim 19, wherein the determining module is further configured to:
determining a first allocation ratio, wherein the first allocation ratio is a ratio of the second-type frequency domain resource to the third-type frequency domain resource; and
the optical communication apparatus further comprises a sending module, wherein
the sending module is configured to send first information to the first ONU, wherein the first information indicates the first allocation ratio.

21. The optical communication apparatus according to claim 18, wherein the determining module is specifically configured to:
if the time domain resource used by the optical communication apparatus to receive the data frame is a second-type time domain resource, determine that the traffic type is the east-west traffic, wherein the second-type time domain resource is used by an online ONU in the passive optical network managed by the optical communication apparatus to send east-west traffic data to the optical communication apparatus; or
if the time domain resource used by the optical communication apparatus to receive the data frame is a third-type time domain resource, determine that the traffic type is the north-south traffic, wherein the third-type time domain resource is used by an online ONU in the passive optical network managed by the optical communication apparatus to send north-south traffic data to the optical communication apparatus.

22. The optical communication apparatus according to claim 21, wherein the determining module is further configured to:
determine a second allocation ratio, wherein the second allocation ratio is a ratio of the second-type time domain resource to the third-type time domain resource; and
the optical communication apparatus further comprises a sending module, wherein
the sending module is configured to send second information to the first ONU, wherein the second information indicates the second allocation ratio.

23. An optical communication apparatus, wherein the optical communication apparatus comprises:
a generation module, configured to generate a data frame;
a determining module, configured to determine a traffic type corresponding to service data carried in the data frame, wherein the traffic type comprises east-west traffic or north-south traffic; and
a sending module, configured to send the data frame to an optical line terminal OLT in an uplink data sending manner corresponding to the traffic type, wherein an uplink data sending manner corresponding to the east-west traffic is different from an uplink data sending manner corresponding to the north-south traffic.

24. The optical communication apparatus according to claim 23, wherein
if the traffic type is the east-west traffic, the sending module is specifically configured to: send the data frame to the OLT via a second-type frequency domain resource, wherein the second-type frequency domain resource is used by an online ONU in a passive optical network managed by the OLT to send east-west traffic data to the OLT; or
if the traffic type is the north-south traffic, the sending module is specifically configured to: send the data frame to the OLT via a third-type frequency domain resource, wherein the third-type frequency domain resource is used by an online ONU in a passive optical network managed by the OLT to send north-south traffic data to the OLT.

25. The optical communication apparatus according to claim 24, wherein the optical communication apparatus further comprises a receiving module, wherein
the receiving module is configured to receive first information from the OLT, wherein the first information indicates a first allocation ratio, and the first allocation ratio is a ratio of the second-type frequency domain resource to the third-type frequency domain resource; and
the determining module is further configured to:
determine the second-type frequency domain resource of the optical communication apparatus and the third-type frequency domain resource of the optical communication apparatus based on the first allocation ratio.

26. The optical communication apparatus according to claim 23, wherein
if the traffic type is the east-west traffic, the sending module is specifically configured to: send the data frame to the OLT via a second-type time domain resource, wherein the second-type time domain resource is used by an online ONU in a passive optical network managed by the OLT to send east-west traffic data to the OLT; or
if the traffic type is the north-south traffic, the sending module is specifically configured to: send the data frame to the OLT via a third-type time domain resource, wherein the third-type time domain resource is used by an online ONU in a passive optical network managed by the OLT to send north-south traffic data to the OLT.

27. The optical communication apparatus according to claim 26, wherein the optical communication apparatus further comprises a receiving module, wherein
the receiving module is configured to receive second information from the OLT, wherein the second information indicates a second allocation ratio, and the second allocation ratio is a ratio of the second-type time domain resource to the third-type time domain resource; and
the determining module is further configured to:
determine the second-type time domain resource of the optical communication apparatus and the third-type time domain resource of the optical communication apparatus based on the second allocation ratio.

28. The optical communication apparatus according to any one of claims 23 to 27, wherein the determining module is specifically configured to:
determine whether a device corresponding to the service data is an online ONU in the passive optical network managed by a first OLT; and
if the device corresponding to the service data is the online ONU in the passive optical network managed by the first OLT, determine that the traffic type is the east-west traffic; or
if the device corresponding to the service data is not the online ONU in the passive optical network managed by the first OLT, determine that the traffic type is the north-south traffic.

29. An optical communication apparatus, wherein the optical communication apparatus comprises a processor, and the processor is configured to execute a computer program or computer instructions in a memory, to perform the method according to any one of claims 1 to 8, or to perform the method according to any one of claims 9 to 14.

30. The optical communication apparatus according to claim 29, wherein the optical communication apparatus further comprises the memory.

31. A computer-readable storage medium, wherein the computer-readable storage medium stores a computer program; and when the computer program is executed by a communication apparatus, the communication apparatus is enabled to perform the method according to any one of claims 1 to 8, or the communication apparatus is enabled to perform the method according to any one of claims 9 to 14.
